# EUROPEAN PATENT APPLICATION

(11) **EP 4 513 969 A1**
(43) Date of publication of application: **26.02.2025**
(21) Application number: 23799168.2
(22) Date of filing: 14.04.2023
(51) Int. Cl.: H04W 48/02

(54) **COMMUNICATION METHOD AND APPARATUS**

(30) Priority: 05.05.2022 CN 202210479701
(71) Applicant: Huawei Technologies Co., Ltd., Shenzhen, Guangdong 518129 (CN)
(72) Inventor: YANG, Linping, Shenzhen, Guangdong 518129 (CN); QIANG, Li, Shenzhen, Guangdong 518129 (CN)
(74) Representative: Goddar, Heinz J.
(86) International application number: PCT/CN2023/088506
(87) International publication number: WO 2023/213181

(57) **Abstract**

A communication method and apparatus are provided, to resolve a problem that a terminal device cannot perform normal communication on other accesses due to an operation performed on common parameters over some accesses of the terminal device. The method includes: When the terminal device on a first access is switched from a first PLMN to a second PLMN, if a state of the terminal device on a second access is that the terminal device is registering with the first PLMN or has registered with the first PLMN, the terminal device determines not to delete a first mobility management parameter on the first access. If a state of the terminal device on a second access is that the terminal device has not registered with the first PLMN, the terminal device determines to delete a first mobility management parameter on the first access. The first access and the second access belong to different access types. A registration status on the second access is considered when the first mobility management parameter is deleted, so that impact on communication on the second access can be reduced.

## Description

### CROSS-REFERENCE TO RELATED APPLICATIONS

This application claims priority to Chinese Patent Application No. 202210479701.2, filed with the China National Intellectual Property Administration on May 5, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

With development of communication, currently, a terminal device is supported in communicating with a core network over a plurality of types of accesses. For example, the terminal device may communicate with the core network over an access of a 3rd generation partnership project (3rd generation partnership project, 3GPP) wireless access technology and an access of a non-3GPP access technology.

When the terminal device registers with a same public land mobile network (public land mobile network, PLMN) over the plurality of accesses, some parameters may be shared on the plurality of accesses of the terminal device during the communication. For example, a non-access stratum (non-access stratum, NAS) integrity protection algorithm, a NAS encryption algorithm, a globally unique temporary user equipment identity (globally unique temporary UE identity, GUTI), and the like are shared on the plurality of accesses of the terminal device.

Because some parameters are shared on the plurality of accesses of the terminal device, if an operation such as deletion or modification is performed on these parameters over one access of the terminal device, communication on other accesses is affected. For example, if NAS security context information is deleted over one access of the terminal device, integrity protection and encryption cannot be performed on uplink signaling on another access, downlink signaling cannot be normally received due to an integrity check failure, and the like. For another example, if the GUTI on one access of the terminal device is deleted, some messages on other accesses cannot carry GUTI information. Consequently, the PLMN cannot identify an identity of the terminal device, the terminal device cannot receive a paging from the PLMN, and the like.

Therefore, how to avoid impact, on the other accesses, of an operation performed on common parameters over some accesses of the terminal device is an urgent problem to be resolved.

### SUMMARY

This application provides a communication method and apparatus, to resolve a problem that a terminal device cannot perform normal communication on other accesses due to an operation performed on common parameters over some accesses of the terminal device.

According to a first aspect, this application provides a communication method. The method may be performed by a terminal device, or may be a chip, a circuit, or another component configured to implement a function of the terminal device. The terminal device is used as an example. The method includes: When the terminal device on a first access is switched from a first PLMN to a second PLMN, if a state of the terminal device on a second access is that the terminal device is registering with the first PLMN or has registered with the first PLMN, the terminal device determines not to delete a first mobility management parameter on the first access. If a state of the terminal device on a second access is that the terminal device has not registered with the first PLMN, the terminal device determines to delete a first mobility management parameter on the first access. The first access and the second access belong to different access types.

Whether the first PLMN (namely, the PLMN registered over the first access) is registering over the second access may be used to determine whether the terminal device needs to use the first mobility management parameter for communication on the second access. In this embodiment of this application, the terminal device deletes the first mobility management parameter on the first access when the terminal device on the second access has not registered with the first PLMN, so that information maintenance costs of the terminal device can be reduced without affecting the communication performed by the terminal device on the second access, and it can be further avoided that the terminal device uses the invalid parameter (namely, the first mobility management parameter) for the communication on the first access, thereby improving communication performance of the terminal device on the first access.

When the terminal device on the second access has registered with the first PLMN or is registering with the first PLMN, the first mobility management parameter is not deleted, so that it can be ensured that the terminal device performs normal communication on the second access.

In a possible design, if a PLMN registered over the first access is the same as a PLMN registered over the second access, the first mobility management parameter is shared on the first access and the second access.

In a possible design, before the terminal device on the first access is switched from the first PLMN to the second PLMN, the method further includes: The terminal device determines that the first PLMN that has been registered over the first access.

In a possible design, after the first mobility management parameter is determined not to be deleted, the method further includes: If the switching is performed from the first PLMN to a third PLMN over the second access, the terminal device determines to delete the first mobility management parameter.

After the terminal device on the second access is switched from the first PLMN to another PLMN, the terminal device does not use the first mobility management parameter for the communication on the second access. Therefore, after the terminal device on the second access is switched from the first PLMN to the another PLMN, the first mobility management parameter is deleted in time, so that parameter maintenance costs of the terminal device can be reduced, and it can be further avoided that the terminal device uses the invalid parameter (namely, the first mobility management parameter) for the communication on the first access and/or the second access.

In a possible design, the first mobility management parameter includes at least one of the following: a key set identifier or a globally unique temporary user equipment identity, where the key set identifier identifies NAS security context information.

In a possible design, the NAS security context information includes a security encryption algorithm, and the security encryption algorithm is a null encryption algorithm.

Because security of the NAS security context information is low when the security encryption algorithm is the null encryption algorithm, in the foregoing manner, the first mobility management parameter is deleted when the security encryption algorithm in the NAS security context information identified by the key set identifier is the null encryption algorithm, thereby facilitating communication security of the terminal device.

According to a second aspect, this application provides a communication method. The method may be performed by a terminal device, or may be a chip, a circuit, or another component configured to implement a function of the terminal device. The terminal device is used as an example. The method includes: The terminal device obtains first information over a first access of the terminal device, and determines, based on the first information and information about a second access of the terminal device, whether to delete a first mobility management parameter on the first access. The first information indicates a reason why a core network device rejects a request of the terminal device, and the first access and the second access belong to different access types.

In this embodiment of this application, when the first mobility management parameter on the first access is deleted, considering the information about the second access, the first mobility management parameter may not be deleted when the first mobility management parameter is needed on the second access, so that the terminal device can perform communication on the second access by using the first mobility management parameter. This avoids a problem that normal communication cannot be performed on the second access because the first mobility management parameter on the first access is deleted in an inappropriate scenario (for example, in a case in which the first mobility management parameter is needed on the second access), and reduces impact on the communication on the second access.

In addition, the terminal device determines whether to delete the first mobility management parameter on the first access, so that flexibility of processing the first mobility management parameter can be provided, and accuracy is also better.

In a possible design, if a PLMN registered over the first access is the same as a PLMN registered over the second access, the first mobility management parameter is shared on the first access and the second access.

In a possible design, the first information is not applicable to the second access. That the terminal device determines, based on the first information and information about a second access of the terminal device, whether to delete a first mobility management parameter includes: The terminal device determines, based on the first information and registration information on the second access, whether to delete the first mobility management parameter.

The registration information on the second access may be used to determine whether the terminal device needs to use the first mobility management parameter for the communication on the second access. In this way, it can be avoided that the terminal device deletes the first mobility management parameter when the terminal device uses the first mobility management parameter for the communication on the second access, thereby ensuring normal communication performed by the terminal device on the second access.

In a possible design, that the terminal device determines, based on the first information and registration information on the second access, whether to delete the first mobility management parameter includes: The terminal device determines, when the registration information on the second access meets one of the following conditions, to delete the first mobility management parameter: The PLMN is not registered over the second access, or the PLMN registered over the second access is different from the PLMN registered over the first access.

If the registration is not performed over the second access on the PLMN registered over the first access, it may be determined that the terminal device does not need to use the first mobility management parameter for communication on the second access. In the foregoing manner, the terminal device deletes the first mobility management parameter when the terminal device does not need to use the first mobility management parameter for the communication on the second access, so that information maintenance costs of the terminal device can be reduced without affecting the communication performed by the terminal device on the second access, and it can be further avoided that the terminal device uses the invalid parameter (namely, the first mobility management parameter) for the communication on the first access, thereby improving communication performance of the terminal device on the first access.

In a possible design, that the terminal device determines, based on the first information and registration information on the second access, whether to delete the first mobility management parameter includes: The terminal device determines, when the registration information on the second access meets the following condition, not to delete the first mobility management parameter: The PLMN registered over the second access is the same as the PLMN registered over the first access.

If the PLMN registered over the first access is registering over the second access, it may be determined that the terminal device needs to use the first mobility management parameter for communication on the second access. In the foregoing manner, the terminal device does not delete the first mobility management parameter when the terminal device needs to use the first mobility management parameter for the communication on the second access, so that normal communication performed by the terminal device on the second access can be ensured.

In a possible design, the first information is applicable to the second access. That the terminal device determines, based on the first information and information about a second access of the terminal device, whether to delete a first mobility management parameter includes: The terminal device determines, based on the first information, the registration information on the second access, and service information on the second access, whether to delete the first mobility management parameter, where the service information on the second access is information about whether an emergency service is being performed on the second access.

In the foregoing design, communication quality deterioration caused by the deletion of the first mobility management parameter when there is the emergency service on the second access can be reduced, so that it can be ensured that the emergency service normally performed over the second access is normally performed, and user experience is improved.

In a possible design, the emergency service is a service corresponding to a protocol data unit (protocol data unit, PDU) session that carries a first identifier, and the first identifier identifies that a service performed on the PDU session is the emergency service.

In a possible design, that the terminal device processes the first mobility management parameter based on the first information, the registration information on the second access, and the service information on the second access includes: The terminal device determines, when the registration information on the second access and the service information on the second access meet one of the following conditions, to delete the first mobility management parameter: A PLMN is not registered over the second access; a PLMN registered over the second access is different from a PLMN registered over the first access; or a PLMN registered over the second access is the same as a PLMN registered over the first access, and no emergency service is being performed on the second access.

In the foregoing design, information maintenance costs of the terminal device can be reduced without affecting the communication performed by the terminal device on the second access or the emergency service that is being performed on the second access, and it can be further avoided that the terminal device uses the invalid parameter (namely, the first mobility management parameter) for the communication on the first access, thereby improving communication performance of the terminal device on the first access.

In a possible design, that the terminal device processes the first mobility management parameter based on the first information, the registration information on the second access, and the service information on the second access includes: The terminal device determines, when the registration information on the second access and the service information on the second access meet the following condition, not to delete the first mobility management parameter: The PLMN registered over the second access is the same as the PLMN registered over the first access, and the emergency service is being performed on the second access.

Based on the foregoing descriptions, it can be ensured that the emergency service on the second access is normally performed, thereby improving user experience.

In a possible design, the terminal device determines to delete the first mobility management parameter after the emergency service ends. In the foregoing design, information maintenance costs of the terminal device can be reduced, and it can be further avoided that the terminal device uses the invalid parameter (namely, the first mobility management parameter) for the communication on the first access, thereby improving communication performance of the terminal device on the first access.

In a possible design, if the first mobility management parameter is determined to be deleted, the method further includes: The terminal device deletes a second mobility management parameter, where the second mobility management parameter includes at least one of the following: a last visited tracking area identity on the second access or a tracking area identity list on the second access. In the foregoing design, information maintenance costs of the terminal device can be reduced.

In a possible design, if the first mobility management parameter is determined to be deleted, the method further includes: The terminal device stops a service that is being performed on the second access. In the foregoing design, communication resources can be saved.

In a possible design, if the first mobility management parameter is determined to be deleted, the method further includes: The terminal device starts a first timer on the second access, where the first timer is used to trigger the terminal device to release an N1 NAS signaling connection; or releases an N1 NAS signaling connection. In the foregoing design, N1 NAS signaling connection resources can be saved.

In a possible design, if the first mobility management parameter is determined to be deleted, the method further includes: If a mobility management procedure is being performed on the second access, the terminal device stops the mobility management procedure. In the foregoing design, communication resources can be saved.

In a possible design, the first mobility management parameter includes at least one of the following: a key set identifier or a globally unique temporary user equipment identity, where the key set identifier identifies NAS security context information.

According to a third aspect, this application provides a communication method. The method may be performed by a core network device, or may be a chip, a circuit, or another component configured to implement a function of the core network device. The core network device is used as an example. The method includes: The core network device sends first information to a terminal device over a first access of the terminal device, where the first information indicates a reason why the core network device rejects a request of the terminal device. The core network device determines, based on the first information and information about a second access of the terminal device, whether to delete a first mobility management parameter on the first access, where the first access and the second access belong to different access types.

In this embodiment of this application, when the first mobility management parameter on the first access is deleted, considering the information about the second access, the first mobility management parameter may not be deleted when the first mobility management parameter is needed on the second access, so that the terminal device may use the first mobility management parameter for communication on the second access. This avoids a problem that normal communication cannot be performed on the second access because the first mobility management parameter on the first access is deleted, and reduces impact on the communication on the second access.

In a possible design, if a PLMN registered over the first access is the same as a PLMN registered over the second access, the first mobility management parameter is shared on the first access and the second access.

In a possible design, the first information is not applicable to the second access. That the core network device determines, based on the first information and information about a second access, whether to delete a first mobility management parameter includes: The core network device determines, based on the first information and registration information on the second access, whether to delete the first mobility management parameter.

The registration information on the second access may be used to determine whether the core network device needs to use the first mobility management parameter for communication on the second access. In this way, it can be avoided that the terminal device deletes the first mobility management parameter when the terminal device uses the first mobility management parameter for the communication on the second access, thereby ensuring normal communication performed by the terminal device on the second access.

In a possible design, that the core network device determines, based on the first information and registration information on the second access, whether to delete the first mobility management parameter includes: The core network device determines, when the registration information on the second access meets one of the following conditions, to delete the first mobility management parameter: The PLMN is not registered over the second access.

If the registration is not performed over the second access on the PLMN registered over the first access, it may be determined that the terminal device does not need to use the first mobility management parameter for communication on the second access. In the foregoing manner, the first mobility management parameter is deleted when the terminal device does not need to use the first mobility management parameter for the communication on the second access, so that information maintenance costs of the core network device can be reduced without affecting the communication performed by the terminal device on the second access.

In a possible design, that the core network device determines, based on the first information and registration information on the second access, whether to delete the first mobility management parameter includes: The core network device determines, when the registration information on the second access meets the following condition, not to delete the first mobility management parameter: The PLMN registered over the second access is the same as the PLMN registered over the first access.

If the PLMN registered over the first access is registering over the second access, it may be determined that the terminal device needs to use the first mobility management parameter for communication on the second access. In the foregoing manner, the terminal device does not delete the first mobility management parameter when the terminal device needs to use the first mobility management parameter for the communication on the second access, so that normal communication performed by the terminal device on the second access can be ensured.

In a possible design, the first information is applicable to the second access. That the core network device determines, based on the first information and information about a second access, whether to delete a first mobility management parameter includes: The core network device determines, based on the first information, the registration information on the second access, and service information on the second access, whether to delete the first mobility management parameter, where the service information on the second access is information about whether an emergency service is being performed on the second access.

In the foregoing design, impact on the service on the second access can be reduced, and user experience can be improved.

In a possible design, that the core network device processes the first mobility management parameter based on the first information, the registration information on the second access, and the service information on the second access includes: The core network device determines, when the registration information on the second access and the service information on the second access meet one of the following conditions, to delete the first mobility management parameter: A PLMN is not registered over the second access; or a PLMN registered over the second access is the same as a PLMN registered over the first access, and no emergency service is being performed on the second access.

In the foregoing design, information maintenance costs of the core network device can be reduced without affecting the communication performed by the terminal device on the second access or the emergency service that is being performed on the second access.

In a possible design, that the core network device processes the first mobility management parameter based on the first information, the registration information on the second access, and the service information on the second access includes: The core network device determines, when the registration information on the second access and the service information on the second access meet the following condition, not to delete the first mobility management parameter: The PLMN registered over the second access is the same as the PLMN registered over the first access, and the emergency service is being performed on the second access.

Based on the foregoing descriptions, it can be ensured that the emergency service on the second access is normally performed, thereby improving user experience.

In a possible design, the core network device determines to delete the first mobility management parameter after the emergency service ends. In the foregoing design, information maintenance costs of the core network device can be reduced.

In a possible design, if the first mobility management parameter is determined to be deleted, the method further includes: The core network device deletes a second mobility management parameter, where the second mobility management parameter includes at least one of the following: a last visited tracking area identity on the second access or a tracking area identity list on the second access. In the foregoing design, information maintenance costs of the core network device can be reduced.

In a possible design, if the first mobility management parameter is determined to be deleted, the method further includes: The core network device stops a service that is being performed on the second access. In the foregoing design, communication resources can be saved.

In a possible design, if the first mobility management parameter is determined to be deleted, the method further includes: The core network device releases an N1 NAS signaling connection. In the foregoing design, N1 NAS signaling connection resources can be saved.

In a possible design, if the first mobility management parameter is determined to be deleted, the method further includes: If a mobility management procedure is being performed on the second access, the core network device stops the mobility management procedure. In the foregoing design, communication resources can be saved.

In a possible design, the first mobility management parameter includes at least one of the following: a key set identifier or a globally unique temporary user equipment identity, where the key set identifier identifies NAS security context information.

According to a fourth aspect, this application provides a communication method. The method may be performed by a terminal device, or may be a chip, a circuit, or another component configured to implement a function of the terminal device. The terminal device is used as an example. The method includes: The terminal device receives first indication information over a first access of the terminal device, where the first indication information indicates whether to delete a first mobility management parameter on the first access; and determines, based on the first indication information, whether to delete the first mobility management parameter on the first access, where the first access and a second access belong to different access types.

In this embodiment of this application, a network device indicates to the terminal device whether to delete the first mobility management parameter, so that complexity of the terminal device can be reduced.

In a possible design, if a PLMN registered over the first access is the same as a PLMN registered over the second access, the first mobility management parameter is shared on the first access and the second access.

In a possible design, that the terminal device determines, based on the first indication information, whether to delete the first mobility management parameter includes: The terminal device determines, based on the first indication information and information about the second access, whether to delete the first mobility management parameter.

In the foregoing manner, when the first mobility management parameter on the first access is deleted, considering the information about the second access, the first mobility management parameter may not be deleted when the first mobility management parameter is needed on the second access, so that the terminal device may use the first mobility management parameter for communication on the second access. This avoids a problem that normal communication cannot be performed on the second access because the first mobility management parameter on the first access is deleted, and reduces impact on the communication on the second access.

In a possible design, that the terminal device determines, based on the first indication information and information about the second access, whether to delete the first mobility management parameter includes: The terminal device determines, based on the first indication information and registration information on the second access, whether to delete the first mobility management parameter.

The registration information on the second access may be used to determine whether the terminal device needs to use the first mobility management parameter for the communication on the second access. In this way, it can be avoided that the terminal device deletes the first mobility management parameter when the terminal device uses the first mobility management parameter for the communication on the second access, thereby ensuring normal communication performed by the terminal device on the second access.

In a possible design, that the terminal device determines, based on the first indication information and registration information on the second access, whether to delete the first mobility management parameter includes: If the first indication information indicates to delete the first mobility management parameter, the terminal device determines, when the registration information on the second access meets one of the following conditions, to delete the first mobility management parameter: The PLMN is not registered over the second access, or the PLMN registered over the second access is different from the PLMN registered over the first access.

If the registration is not performed over the second access on the PLMN registered over the first access, it may be determined that the terminal device does not need to use the first mobility management parameter for communication on the second access. In this manner, the terminal device deletes the first mobility management parameter when the terminal device does not need to use the first mobility management parameter for the communication on the second access, so that information maintenance costs of the terminal device can be reduced without affecting the communication performed by the terminal device on the second access, and it can be further avoided that the terminal device uses the invalid parameter (namely, the first mobility management parameter) for the communication on the first access, thereby improving communication performance of the terminal device on the first access.

In a possible design, that the terminal device determines, based on the first indication information and registration information on the second access, whether to delete the first mobility management parameter includes: If the first indication information indicates to delete the first mobility management parameter, and the PLMN registered over the second access is the same as the PLMN on which the registration is not performed over the first access, the terminal device determines, based on service information on the second access, whether to delete the first mobility management parameter, where the service information on the second access is information about whether an emergency service is being performed on the second access.

In the foregoing design, impact on the service on the second access can be reduced, and user experience can be improved.

In a possible design, that the terminal device determines, based on service information on the second access, whether to delete the first mobility management parameter includes: If the emergency service is being performed on the second access, the terminal device determines not to delete the first mobility management parameter; or if no emergency service is being performed on the second access, the terminal device determines to delete the first mobility management parameter.

In the foregoing design, it can be ensured that the emergency service that is normally performed on the second access is normally performed, thereby improving user experience.

In a possible design, if the first mobility management parameter is determined to be deleted, the method further includes: The terminal device determines to delete the first mobility management parameter after the emergency service ends. In the foregoing design, information maintenance costs of the terminal device can be reduced, and it can be further avoided that the terminal device uses the invalid parameter (namely, the first mobility management parameter) for the communication on the first access, thereby improving communication performance of the terminal device on the first access.

In a possible design, if the first mobility management parameter is determined to be deleted, the method further includes: The terminal device deletes a second mobility management parameter, where the second mobility management parameter includes at least one of the following: a last visited tracking area identity on the second access or a tracking area identity list on the second access. In the foregoing design, information maintenance costs of the terminal device can be reduced.

In a possible design, if the first mobility management parameter is determined to be deleted, the method further includes: The terminal device stops a service that is being performed on the second access. In the foregoing design, communication resources can be saved.

In a possible design, if the first mobility management parameter is determined to be deleted, the method further includes: The terminal device starts a first timer on the second access, where the first timer is used to trigger the terminal device to release an N1 NAS signaling connection; or releases an N1 NAS signaling connection. In the foregoing design, N1 NAS signaling connection resources can be saved.

In a possible design, if the first mobility management parameter is determined to be deleted, the method further includes: If a mobility management procedure is being performed on the second access, the terminal device stops the mobility management procedure. In the foregoing design, communication resources can be saved.

In a possible design, the first mobility management parameter includes at least one of the following: a key set identifier or a globally unique temporary user equipment identity, where the key set identifier identifies NAS security context information.

According to a fifth aspect, this application provides a communication method. The method may be performed by a core network device, or may be a chip, a circuit, or another component configured to implement a function of the core network device. The core network device is used as an example. The method includes: The core network device determines first indication information, and sends the first indication information to a terminal device over a first access of the terminal device, where the first indication information indicates whether to delete a first mobility management parameter on the first access, and the first access and a second access belong to different access types.

In this embodiment of this application, a network device indicates to the terminal device whether to delete the first mobility management parameter, so that complexity of the terminal device can be reduced.

In a possible design, if a PLMN registered over the first access is the same as a PLMN registered over the second access, the first mobility management parameter is shared on the first access and the second access.

In a possible design, that the core network device determines first indication information includes: The core network device determines the first indication information based on second indication information and information about the second access, where the second indication information indicates a reason why the core network device rejects a request of the terminal device.

In this embodiment of this application, when the first mobility management parameter on the first access is deleted, considering the information about the second access, the first mobility management parameter may not be deleted when the first mobility management parameter is needed on the second access, so that the terminal device may use the first mobility management parameter for communication on the second access. This avoids a problem that normal communication cannot be performed on the second access because the first mobility management parameter on the first access is deleted, and reduces impact on the communication on the second access.

In a possible design, the second indication information is not applicable to the second access. That the core network device determines the first indication information based on second indication information and information about the second access includes: The core network device determines the first indication information based on the second indication information and registration information on the second access.

The registration information on the second access may be used to determine whether the core network device needs to use the first mobility management parameter for communication on the second access. In this way, it can be avoided that the terminal device deletes the first mobility management parameter when the terminal device uses the first mobility management parameter for the communication on the second access, thereby ensuring normal communication performed by the terminal device on the second access.

In a possible design, that the core network device determines the first indication information based on the second indication information and registration information on the second access includes: The core network device indicates, by the first indication information when the registration information on the second access meets one of the following conditions, to delete the first mobility management parameter: The PLMN is not registered over the second access. Alternatively, the core network device indicates, by the first indication information when the registration information on the second access meets the following condition, not to delete the first mobility management parameter: The PLMN has been registered or is being registered over the second access.

If the registration is not performed over the second access on the PLMN registered over the first access, it may be determined that the terminal device does not need to use the first mobility management parameter for communication on the second access. In the foregoing manner, the first mobility management parameter is deleted when the terminal device does not need to use the first mobility management parameter for the communication on the second access, so that information maintenance costs of the core network device can be reduced without affecting the communication performed by the terminal device on the second access.

If the PLMN registered over the first access is registering over the second access, it may be determined that the terminal device needs to use the first mobility management parameter for the communication on the second access. In the foregoing manner, the terminal device does not delete the first mobility management parameter when the terminal device needs to use the first mobility management parameter for the communication on the second access, so that normal communication performed by the terminal device on the second access can be ensured.

In a possible design, the second indication information is applicable to the second access. That the core network device determines the first indication information based on second indication information and information about the second access includes: The core network device determines the first indication information based on the second indication information, the registration information on the second access, and service information on the second access, where the service information on the second access is information about whether an emergency service is being performed on the second access.

In the foregoing design, impact on the service on the second access can be reduced, and user experience can be improved.

In a possible design, that the core network device determines the first indication information based on the second indication information, the registration information on the second access, and service information on the second access includes: The core network device indicates, by the first indication information when the registration information on the second access and the service information on the second access meet one of the following conditions, to delete the first mobility management parameter: A PLMN is not registered over the second access; or the PLMN has been registered or is being registered over the second access, and no emergency service is being performed on the second access.

In the foregoing design, information maintenance costs of the core network device can be reduced without affecting the communication performed by the terminal device on the second access or the emergency service that is being performed on the second access.

In a possible design, that the core network device determines the first indication information based on the second indication information, the registration information on the second access, and service information on the second access includes: The core network device indicates, by the first indication information when the registration information on the second access and the service information on the second access meet the following condition, not to delete the first mobility management parameter: The PLMN has been registered or is being registered over the second access, and the emergency service is being performed on the second access.

Based on the foregoing descriptions, it can be ensured that the emergency service on the second access is normally performed, thereby improving user experience.

In a possible design, the first mobility management parameter includes at least one of the following: a key set identifier or a globally unique temporary user equipment identity, where the key set identifier identifies NAS security context information.

According to a sixth aspect, this application further provides a communication apparatus, and the communication apparatus has a function of implementing any method provided in the first aspect, the second aspect, or the fourth aspect. The communication apparatus may be implemented by hardware, or may be implemented by hardware executing corresponding software. The hardware or software includes one or more units or modules corresponding to the foregoing function.

In a possible design, the communication apparatus includes a processor. The processor is configured to support the communication apparatus in performing a corresponding function of the terminal device in the foregoing methods. The communication apparatus may further include a memory. The memory may be coupled to the processor, and the memory stores program instructions and data that are necessary for the communication apparatus. Optionally, the communication apparatus further includes an interface circuit, and the interface circuit is configured to support communication between the communication apparatus and another device.

In a possible design, the communication apparatus includes corresponding functional modules, respectively configured to implement steps in the foregoing methods. The function may be implemented by hardware, or may be implemented by hardware executing corresponding software. The hardware or software includes one or more modules corresponding to the foregoing function.

In a possible design, a structure of the communication apparatus includes a processing module and a communication module. The modules may perform a corresponding function in the foregoing method examples. For details, refer to descriptions in the method provided in the first aspect, the second aspect, or the fourth aspect. Details are not described herein again.

According to a seventh aspect, this application further provides a communication apparatus, and the communication apparatus has a function of implementing any method provided in the third aspect or the fifth aspect. The communication apparatus may be implemented by hardware, or may be implemented by hardware executing corresponding software. The hardware or software includes one or more units or modules corresponding to the foregoing function.

In a possible design, the communication apparatus includes a processor. The processor is configured to support the communication apparatus in performing a corresponding function of the network device in the foregoing methods. The communication apparatus may further include a memory. The memory may be coupled to the processor, and the memory stores program instructions and data that are necessary for the communication apparatus. Optionally, the communication apparatus further includes an interface circuit, and the interface circuit is configured to support communication between the communication apparatus and another device.

In a possible design, the communication apparatus includes corresponding functional modules, respectively configured to implement steps in the foregoing methods. The function may be implemented by hardware, or may be implemented by hardware executing corresponding software. The hardware or software includes one or more modules corresponding to the foregoing function.

In a possible design, a structure of the communication apparatus includes a processing module and a communication module. The modules may perform a corresponding function in the foregoing method examples. For details, refer to descriptions in the method provided in the third aspect or the fifth aspect. Details are not described herein again.

According to an eighth aspect, a communication apparatus is provided, including a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method in any one of the first aspect, the second aspect, or the fourth aspect, and the possible designs by using a logic circuit or by executing code instructions.

According to a ninth aspect, a communication apparatus is provided, including a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method in any one of the third aspect or the fifth aspect, and the possible designs by using a logic circuit or by executing code instructions.

According to a tenth aspect, a computer-readable storage medium is provided. The computer-readable storage medium stores a computer program or instructions. When the computer program or the instructions are executed by a processor, the method in any one of the first aspect to the fifth aspect and any one of the possible designs is implemented.

According to an eleventh aspect, a computer program product storing instructions is provided. When the instructions are run by a processor, the method in any one of the first aspect to the fifth aspect and any one of the possible designs is implemented.

According to a twelfth aspect, a chip system is provided. The chip system includes a processor, and may further include a memory, to implement the method in any one of the first aspect to the fifth aspect and any one of the possible designs. The chip system may include a chip, or may include a chip and another discrete device.

According to a thirteenth aspect, a communication system is provided. The system includes the apparatus (for example, the terminal device) according to the first aspect, and may further include a core network device.

According to a fourteenth aspect, a communication system is provided. The system includes the apparatus (for example, the terminal device) according to the second aspect and the apparatus (for example, the core network device) according to the third aspect.

According to a fifteenth aspect, a communication system is provided. The system includes the apparatus (for example, the terminal device) according to the fourth aspect and the apparatus (for example, the core network device) according to the fifth aspect.

### BRIEF DESCRIPTION OF DRAWINGS

FIG. 1 is a diagram of a 5G network architecture based on a service-based architecture according to an embodiment of this application;
FIG. 2 is a diagram of an architecture of an untrusted non-3GPP access network according to an embodiment of this application;
FIG. 3 is a diagram of an architecture of a trusted non-3 GPP access network according to an embodiment of this application;
FIG. 4 is a schematic flowchart of a communication method according to an embodiment of this application;
FIG. 5 is a schematic flowchart of a communication method according to an embodiment of this application;
FIG. 6 is a schematic flowchart of a communication method according to an embodiment of this application;
FIG. 7 is a schematic flowchart of a communication method according to an embodiment of this application;
FIG. 8 is a diagram of a structure of a communication apparatus according to an embodiment of this application; and
FIG. 9 is a diagram of a structure of a communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

The following describes an architecture of a network system to which methods provided in this application are applied.

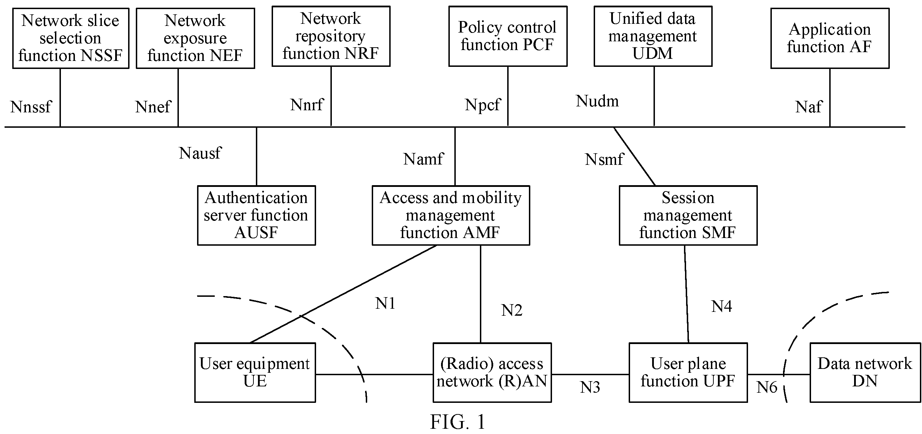

FIG. 1 is a diagram of a 5G network architecture based on a service-based architecture. The 5G network architecture shown in FIG. 1 may include three parts: a terminal device, a data network (data network, DN), and a carrier network. The following briefly describes functions of some network elements.

The carrier network may include one or more of the following network elements: an authentication server function (authentication server function, AUSF) network element, a network exposure function (network exposure function, NEF) network element, a policy control function (policy control function, PCF) network element, a unified data management (unified data management, UDM) network element, a unified data repository (unified data repository, UDR), a network repository function (network repository function, NRF) network element, an access and mobility management function (access and mobility management function, AMF) network element, a session management function (session management function, SMF) network element, an access network, a user plane function (user plane function, UPF) network element, and the like. In the carrier network, a part other than a radio access network part may be referred to as a core network part. In a possible implementation method, the carrier network further includes an application function (Application Function, AF) network element. Alternatively, the AF network element may not belong to the carrier network, but belongs to a third party.

The terminal device (terminal device) is a device having a wireless transceiver function, and may be deployed on land, including an indoor or outdoor device, a handheld device, or an in-vehicle device; or may be deployed on a water surface (for example, on a ship); or may be deployed in the air (for example, on an airplane, a balloon, or a satellite). The terminal device may be a mobile phone (mobile phone), a tablet computer (tablet), a computer having the wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), UE, or the like.

The terminal device may establish a connection to the carrier network through an interface (for example, N1) provided by the carrier network, and use services such as a data service and/or a voice service provided by the carrier network. The terminal device may further access the DN through the carrier network, and use a carrier service deployed on the DN and/or a service provided by the third party. The third party may be a service party other than the carrier network and the terminal device, and may provide services such as a data service and/or a voice service for the terminal device. A specific representation form of the third party may be specifically determined based on an actual application scenario, and is not limited herein.

The core network part includes a user plane function and a control plane function.

The user plane function includes a UPF network element. As an interface to the data network, the UPF network element completes functions such as forwarding of user plane data (for example, a data packet), quality of service (quality of service, QoS) control, session/flow-level charging statistics collection, and bandwidth limiting.

The control plane function is mainly for user registration and authentication, mobility management, delivery of a data packet forwarding policy and a QoS control policy to the user plane function, and the like. The control plane function may be further classified, including another network element other than the UPF network element, for example, the AMF network element and the SMF network element.

The AMF network element mainly performs functions such as a registration procedure during user access and location management and access authentication/authorization during user movement. In addition, the AMF network element is further responsible for transferring a user policy between the UE and the PCF.

The SMF network element is mainly configured to: establish a corresponding session connection when a user initiates a service, and provide a specific service for the user, for example, deliver a data packet forwarding policy and a QoS policy to the UPF based on an NG4 interface between the SMF and the UPF.

The AUSF network element is mainly responsible for authenticating the user, and determining validity of the user equipment, to determine whether to allow the user or the equipment to access the network.

The UDM network element is mainly responsible for a function such as storage of subscription data of the user equipment and user access authorization.

The UDR is mainly responsible for functions of storage and access of the subscription data, policy data, application data, and other types of data.

The PCF network element is mainly responsible for delivering a service-related policy to the AMF or the SMF.

The NEF network element is mainly configured to support capability and event exposure.

The AF network element mainly transfers a requirement of an application side for a network side to the PCF, so that the PCF generates a corresponding policy. The AF may be a third-party functional entity, or may be a carrier-deployed application service, for example, an internet protocol (internet protocol, IP) multimedia subsystem (IP Multimedia Subsystem, IMS) voice call service.

The NRF network element may be configured to: provide a network element discovery function, and provide, based on a request of another network element, network element information corresponding to a network element type. The NRF further provides a network element management service, for example, registration, update, and deregistration of a network element and subscription and push of a network element status.

The DN is a network outside the carrier network. The carrier network may access a plurality of DNs, and a plurality of services may be deployed on the DNs, to provide services such as a data service and/or a voice service for the terminal device. For example, the DN is a private network of a smart factory, a sensor installed in a workshop of the smart factory may be a terminal device, a control server of the sensor is deployed in the DN, and the control server may provide a service for the sensor. The sensor may communicate with the control server, to obtain instructions of the control server, transmit collected sensor data to the control server based on the instructions, and the like. For another example, the DN is an internal office network of a company, a mobile phone or a computer of an employee of the company may be a terminal device, and the mobile phone or the computer of the employee may access information, data resources, and the like on the internal office network of the company.

In FIG. 1, Nausf, Nnef, Npcf, Nudm, Naf, Namf, Nsmf, N1, N2, N3, N4, and N6 are interface sequence numbers. For meanings of these interface sequence numbers, refer to meanings defined in the 3rd generation partnership project (3rd generation partnership project, 3GPP) standard protocol. This is not limited herein.

The access network is a sub-network of the carrier network, and is an implementation system between a service node in the carrier network and the terminal device. To access the carrier network, the terminal device first passes through the access network, and then may be connected to the service node in the carrier network through the access network.

The access network may include a 3GPP access network and/or a non-3GPP access network, that is, the terminal device may access a core network by using the 3GPP access network (or a 3GPP access technology) and/or the non-3GPP access network (or a N3GPP access technology). The non-3GPP access network is an access network other than 3GPP, such as a wireless local area network (wireless local area network, WLAN), a wireless fidelity (wireless fidelity, Wi-Fi) network, worldwide interoperability for microwave access (worldwide interoperability for microwave access, WiMAX), and a fixed network. The non-3GPP access network may include a trusted non-3GPP access network, an untrusted non-3 GPP access network, a wired network, and the like. The untrusted non-3 GPP access network may include, for example, an untrusted WLAN, an untrusted Wi-Fi network, and untrusted WiMAX. The trusted non-3GPP access network may include, for example, a trusted WLAN, a trusted Wi-Fi network, and trusted WiMAX, and the wired network may include, for example, the fixed network.

An access of the terminal device in the 3GPP access network may be referred to as a 3GPP access, and an access of the terminal device in the non-3GPP access network may be referred to as a non-3GPP access.

An access device in the 3GPP access network may be a device that provides a wireless communication function for the terminal device, and an access device in the 3GPP access network may also be referred to as an access network device. The access device in the 3GPP access network includes but is not limited to: a next generation NodeB (gNodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmission reception point (transmission reception point, TRP), a transmitting point (transmitting point, TP), a mobile switching center, and the like.

An access device in the untrusted non-3GPP access network may be referred to as a non-3GPP interworking function (non-3GPP interworking function, N3IWF) device or a next generation packet data gateway (next generation packet data gateway, ngPDG). An N3IWF network element is similar to an evolved packet data gateway (evolved packet data gateway, ePDG) in long term evolution (long term evolution, LTE), and is used in 5G to establish an internet protocol security (internet protocol security, IPsec) tunnel with the terminal device when the terminal device accesses the core network through the non-3GPP access network. In a definition of future 5G, a name of the N3IWF may be changed. In this application, only an example in which a non-3GPP network access gateway is the N3IWF device is used for description.

For example, the N3IWF device may include a router and the like.

The access device in the trusted non-3GPP access network may include a trusted non-3GPP access point (trusted non-3GPP access point, TNAP) and/or a trusted non-3GPP gateway function (trusted non-3GPP gateway function, TNGF). The TNAP is configured to communicate with the terminal device, and the TNGF is configured to communicate with a core network device. The TNAP may include but is not limited to a WLAN access point (access point, AP), a fixed access network device (fixed access network, FAN), a switch, a router, and the like.

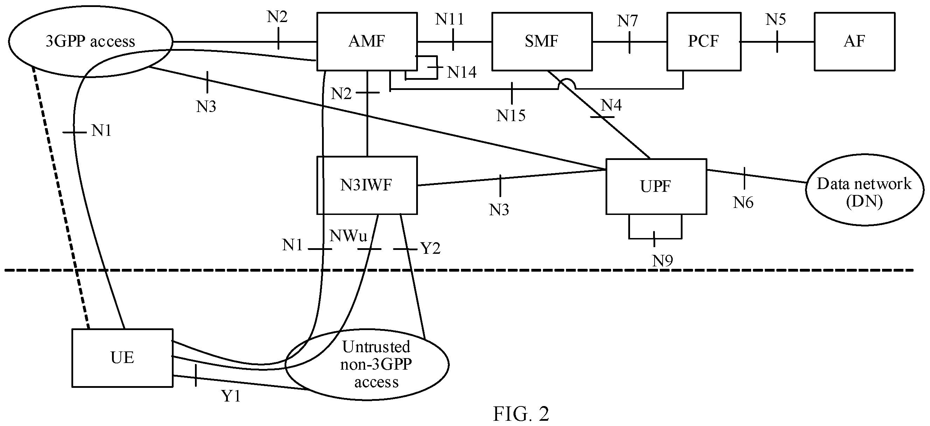

In a possible example, that the terminal device accesses the core network through the 3GPP access network and the untrusted non-3GPP access network may be shown in FIG. 2. For example, an interface between the UPF and the 3GPP access network element may be referred to as an N3 interface, an interface between the UPF and the N3IWF device may be referred to as an N3 interface, an interface between the 3GPP access network element and the AMF may be referred to as an N2 interface, and an interface between the N3IWF device and the AMF may be referred to as an N2 interface. Other interfaces are shown in FIG. 2, and are not described herein again.

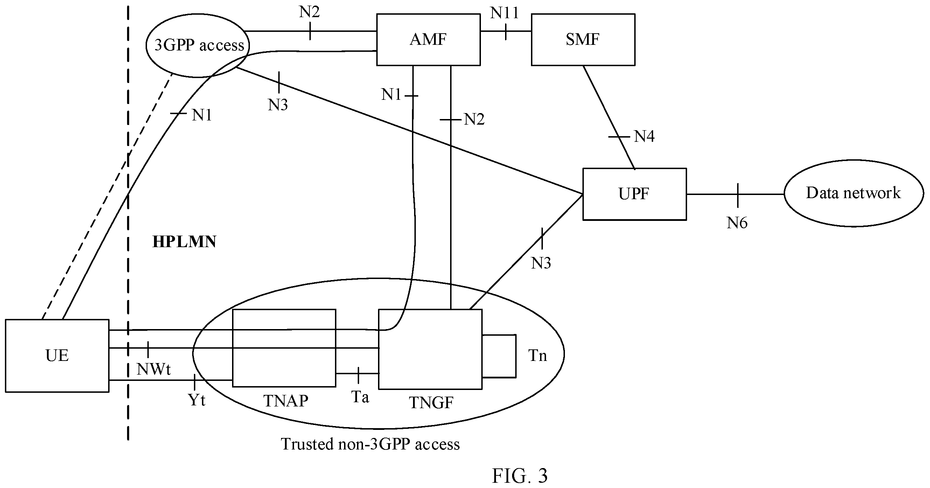

In another possible example, that the terminal device accesses the core network through the 3GPP access network and the trusted non-3GPP access network may be shown in FIG. 3. For example, an interface between the UPF and the 3GPP access network element may be referred to as an N3 interface, and an interface between the UPF and the TNGF network element may be referred to as an N3 interface. An interface between the 3GPP access network element and the AMF may be referred to as an N2 interface, an interface between the TNGF network element and the AMF may be referred to as an N2 interface, and an interface between the TNGF network element and the TNAP may be referred to as Ta. Other interfaces are shown in FIG. 3, and are not described herein again.

It should be understood that FIG. 2 and FIG. 3 are merely diagrams of architectures of the untrusted non-3GPP access network and the trusted non-3GPP access network, and types and a quantity of access networks through which the terminal device accesses the core network are not limited. During specific implementation, the terminal device may access the core network through two or more access networks. An access network through which the terminal device accesses the core network may be but is not limited to one or more of the following types of access networks: the 3GPP access network, the untrusted non-3 GPP access network, or the trusted non-3 GPP access network, or may be another type of access network that emerges in future communication development. For types of networks included in the untrusted non-3GPP access network and the trusted non-3GPP access network, refer to the foregoing descriptions about the untrusted non-3GPP access network and the trusted non-3GPP access network. Details are not described herein again.

An access of the terminal device in the 3GPP access network may be referred to as a 3GPP access, and an access of the terminal device in the non-3GPP access network may be referred to as a non-3GPP access.

It should be understood that the 3GPP access and the non-3GPP access are merely examples of names, and the 3GPP access may also be described as a 3GPP access link, a 3GPP transmission channel, a 3GPP transmission path, a 3GPP transmission link, a 3GPP communication link, or the like. Provided that the communication link is based on the 3GPP access technology, it may be understood as that the 3GPP access described in this application is used.

The non-3GPP access may also be described as a non-3GPP access link, a non-3GPP transmission channel, a non-3GPP transmission path, a non-3GPP transmission link, or the like. Provided that the communication link is based on the non-3GPP access technology, it may be understood as that the non-3GPP access described in this application is used.

It may be understood that a first access in the following of this application may also be referred to as a first access link, a first transmission channel, a first transmission path, a first transmission link, a first communication link, or the like.

A second access in the following may also be referred to as a second access link, a second transmission channel, a second transmission path, a second transmission link, a second communication link, or the like.

It may be understood that the foregoing network elements or functions may be network elements in a hardware device, software functions running on dedicated hardware, or virtualized functions instantiated on a platform (for example, a cloud platform). One or more services may be obtained through division into the foregoing network elements or functions. Further, services that exist independently of network functions may occur. In this application, instances of the functions, instances of services included in the functions, or instances of the services that exist independently of network functions may be referred to as service instances.

Further, a network element a may be referred to as a for short. For example, the AF network element may be referred to as an AF for short, the NEF network element may be referred to as an NEF for short, and the AMF network element may be referred to as an AMF for short.

It should be understood that FIG. 1 to FIG. 3 are merely examples of applicable network architectures, and the actually applied network architectures may include more or fewer network elements than those in FIG. 1 to FIG. 3. In embodiments of this application, names of the foregoing used network elements may change while functions of the network elements may remain the same in a future communication system.

The foregoing describes the network architectures in embodiments of this application. The following explains and describes some terms in embodiments of this application, to facilitate understanding of a person skilled in the art.

Mobility management parameter: A mobility management parameter may include but is not limited to a parameter such as a key set identifier (ngKSI or eKSI), a globally unique temporary terminal identifier (globally unique temporary UE identity, GUTI), or a last visited tracking area tracking area identity (tracking area identity, TAI).

Key set identifier: A key set identifier identifies NAS security context information. The NAS security context information may include but is not limited to information such as a NAS integrity protection algorithm, a NAS encryption algorithm, a key (KAMF) of an AMF in a serving network, and user equipment (user equipment, UE) security capability information.

The NAS integrity protection algorithm may also be referred to as a 5G integrity protection algorithm, an integrity protection algorithm, or the like, and is used to perform integrity verification on a NAS message.

The NAS encryption algorithm may also be referred to as a 5G encryption algorithm, a security encryption algorithm, or the like, and is used to encrypt the NAS message.

GUTI: a temporary identifier allocated by the core network to the UE.

In embodiments of this application, "at least one" means one or more, and "a plurality of" means two or more. "And/or" describes an association relationship between associated objects, and represents that three relationships may exist. For example, A and/or B may represent the following cases: A exists alone, both A and B exist, and B exists alone, where A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural.

Unless otherwise stated, ordinal terms such as "first" and "second" mentioned in embodiments of this application are used to distinguish between a plurality of objects, and are not intended to limit sizes, content, a sequence, a time sequence, priorities, importance degrees, or the like of the plurality of objects. For example, a first access and a second access are merely used to distinguish between different accesses, but do not indicate different priorities, importance degrees, or the like of the two accesses.

The following describes technical features in embodiments of this application.

As shown in FIG. 2 or FIG. 3, the terminal device may communicate with the core network over a plurality of accesses. For example, the terminal device may communicate with the core network via the 3GPP access and the non-3GPP access. When the terminal device on the plurality of accesses registers with a same PLMN, some parameters may be shared on the plurality of accesses of the terminal device during the communication, that is, the terminal device and the core network device maintain a set of parameters. For example, to implement password separation and replay protection, the NAS security context information and the GUTI are shared on the plurality of accesses of the terminal device.

Because some parameters are shared on the plurality of accesses of the terminal device, if an operation is performed on these parameters over one access of the terminal device, communication on other accesses is affected. For example, the terminal device receives a reject message over an access A, where the reject message carries a cause value. The terminal device may delete the key set identifier and/or the GUTI for the access A based on the cause value.

For example, the cause value carried in the reject message is #3 or #6, and the cause value indicates an illegal terminal (Illegal UE). Currently, after receiving the cause value, the terminal device may perform at least one of the following processing: updating a 5GS state to 5U3 roaming not allowed (5U3 ROAMING NOT ALLOWED); deleting one or more of the GUTI, the last visited tracking area TAI, a TAI list, and the key set identifier; and in a case of the PLMN, considering a universal subscriber identity module (universal subscriber identity module, USIM) invalid for 5GS services until a universal integrated circuit card (universal integrated circuit card, UICC) including the USIM is disabled or deleted or a timer T3245 expires.

For another example, the cause value carried in the reject message is #7, and the cause value indicates 5GS services not allowed (5GS services not allowed). Currently, after receiving the cause value, the terminal device may perform at least one of the following processing: updating a 5GS state to 5U3 roaming not allowed; deleting one or more of the GUTI, the last visited tracking area TAI, a TAI list, and the key set identifier; and in a case of the PLMN, considering a USIM invalid for 5GS services until a UICC including the USIM is disabled or deleted or a timer T3245 expires.

For another example, the cause value carried in the reject message is #11, and the cause value indicates the PLMN not allowed (PLMN not allowed). Currently, after receiving the cause value, the terminal device may perform at least one of the following processing: updating a 5GS state to 5U3 roaming not allowed; and deleting one or more of the GUTI, the last visited tracking area TAI, a TAI list, and the key set identifier.

For another example, the cause value carried in the reject message is #72, and the cause value indicates the non-3GPP access to a 5G core network (5G Core Network, 5GCN) not allowed (non-3GPP access to 5GCN not allowed). Currently, after receiving the cause value, the terminal device may perform at least one of the following processing: if the core network is accessed over the non-3GPP access, updating a 5GS state to 5U3 roaming not allowed; and deleting one or more of the GUTI, the last visited tracking area TAI, a TAI list, and the key set identifier.

For another example, the cause value carried in the reject message is #12, and the cause value indicates the tracking area not allowed (Tracking area not allowed). Currently, after receiving the cause value, the terminal device may perform at least one of the following processing: updating a 5GS state to 5U3 roaming not allowed; deleting one or more of the GUTI, the last visited tracking area TAI, a TAI list, and the key set identifier; and resetting a registration attempt counter.

For another example, the cause value carried in the reject message is #78, and the cause value indicates the PLMN not allowed to operate at a present terminal device location (PLMN not allowed to operate at the present UE location). Currently, after receiving the cause value, the terminal device may perform at least one of the following processing: updating a 5GS state to 5U3 roaming not allowed; and deleting one or more of the GUTI, the last visited tracking area TAI, a TAI list, and the key set identifier.

Because the terminal device maintains a set of NAS security context information and a GUTI for the access A and an access B, if the key set identifier for the access A is deleted, the NAS security context information for the access A and the access B is deleted. Consequently, integrity protection and encryption cannot be performed on uplink signaling on the access B, downlink signaling cannot be normally received due to an integrity check failure, and the like. If the GUTI on the access A is deleted, some messages on the access B cannot carry GUTI information. Consequently, the PLMN cannot identify an identity of the terminal device, the terminal device cannot receive a paging from the PLMN, and the like.

Based on this, embodiments of this application provide a communication method and apparatus, to resolve a problem that a terminal device cannot perform normal communication on other accesses due to an operation performed on common parameters over some accesses of the terminal device. The method and the apparatus are based on a same concept. The method and the apparatus have a similar problem-resolving principle. Therefore, for implementations of the apparatus and the method, refer to each other. Repeated content is not described again.

The communication method provided in this application may be applied to various communication systems, for example, internet of things (internet of things, IoT), narrowband internet of things (narrowband internet of things, NB-IoT), long term evolution (long term evolution, LTE), a 5th generation (5G) communication system, an LTE and 5G hybrid architecture, a 5G new radio (new radio, NR) system, and a 6G system or a new communication system that emerges in future communication development. The communication system in this application may alternatively be a machine-to-machine (machine-to-machine, M2M) network, a non-terrestrial network (non-terrestrial network, NTN) network, or another network.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

In embodiments of this application, "if..." may alternatively be described as "in a case in which...", "assuming that", "when... ", or the like. For example, "if a state of the terminal device on a second access is that the terminal device is registering with a first PLMN or has registered with a first PLMN" may alternatively be described as "assuming that a state of the terminal device on a second access is that the terminal device is registering with a first PLMN or has registered with a first PLMN", "in a case in which a state of the terminal device on a second access is that the terminal device is registering with a first PLMN or has registered with a first PLMN", "when a state of the terminal device on a second access is registering with a first PLMN or has registered with a first PLMN", or the like.

In embodiments of this application, "switching from... to..." may alternatively be described as "handover from (or from) to...", "reselection from (or from) to... ", "selection from (or from) to...", "change from (or from) to...", "transformation from (or from) to...", "transferring from (or from) to..." or the like.

For example, "the terminal device on a first access is switched from a first PLMN to a second PLMN" in the following may be described as "the terminal device on a first access is handed over from (or from) a first PLMN to a second PLMN", "the terminal device on a first access is reselected from (or from) a first PLMN to a second PLMN", "the terminal device on a first access is selected from (or from) a first PLMN to a second PLMN", "the terminal device on a first access is changed from (or from) a first PLMN to a second PLMN", "the terminal device on a first access is transformed from (or from) a first PLMN to a second PLMN", "the terminal device on a first access is transferred from (or from) a first PLMN to a second PLMN", or the like.

For ease of description, the following uses an example in which the terminal device accesses the core network over the first access and the second access for description. The first access and the second access belong to different access types, or may be described as that the first access and the second access use different access technologies. For example, the first access is a 3GPP access, and the second access is a trusted non-3GPP access or an untrusted non-3GPP access. Alternatively, the first access is a trusted non-3GPP access or an untrusted non-3GPP access, and the second access is a 3GPP access.

For another example, the first access is a trusted non-3GPP access, and the second access is an untrusted non-3GPP access. Alternatively, the first access is an untrusted non-3GPP access, and the second access is a trusted non-3GPP access.

It should be understood that, in embodiments of this application, it is not limited to a case that the terminal device has only two types of access. During specific implementation, the terminal device may further access the core network over the first access, the second access, and other accesses (such as a third access and a fourth access). The other accesses, the first access, and the second access all belong to different access types, that is, correspond (or apply) different access technologies.

In embodiments of this application, the terminal device may communicate with a core network device via an access device of an access network. For example, in the 3GPP access network, the terminal device may communicate with the core network device via an access network device. For another example, in the non-3GPP access network, the terminal device may communicate with the core network device via an N3IWF device.

The following describes the technical solutions of embodiments of this application with reference to the accompanying drawings in embodiments of this application.

Embodiments of this application may be applied to a scenario in which a first mobility management parameter on the first access of the terminal device needs to be deleted. If a PLMN registered over the first access is the same as a PLMN registered over the second access, the first mobility management parameter is shared on the first access and the second access.

For example, the first mobility management parameter may include at least one of the following: a key set identifier or a GUTI. The first mobility management parameter may further include other parameters shared on the first access and the second access, which are not listed one by one herein.

The following describes three cases in which the first mobility management parameter on the first access needs to be deleted. It should be understood that this application is not limited to the following three cases in which the first mobility management parameter on the first access needs to be deleted. Provided that the first mobility management parameter on the first access needs to be deleted in a specific case, it may be considered that the first mobility management parameter on the first access needs to be deleted in embodiments of this application. A manner in which the terminal device processes the first mobility management parameter on the first access in another scenario is similar to a manner in which the terminal device processes the first mobility management parameter on the first access in the following three cases in this application.

Case 1: The terminal device on the first access is switched from the first PLMN to the second PLMN.

The second PLMN is other than a registered PLMN (registered PLMN, RPLMN) over the first access and an equivalent PLMN (equivalent PLMN, EPLMN) over the first access.

Case 2: The terminal device obtains first information over the first access, where the first information indicates a reason why the core network device rejects a request of the terminal device. In this example, the terminal device may determine, based on the first information, that the first mobility management parameter on the first access needs to be deleted.

In a possible implementation, the terminal device may receive a registration reject message over the first access, and the registration reject message may carry a cause value. Alternatively, the terminal device may receive a service reject message over the first access, where the service reject message carries a cause value. Alternatively, the terminal device may receive a deregistration request message over the first access, where the deregistration request message carries a cause value. In this example, the cause value may be understood as the foregoing first information.

For example, if the cause value received by the terminal device on the first access is #3 or #6, #7, #11, #72, #12, or #78, the terminal device may determine that the first mobility management parameter on the first access needs to be deleted.

It should be understood that only the seven cause values are shown as an example herein, and it is not limited a case in which it is determined based only on the seven cause values that the first mobility management parameter on the first access is deleted.

Case 3: A scenario in which the first mobility management parameter on the first access needs to be deleted may alternatively be: The terminal device receives a first message over the first access. In this example, after receiving the first message, the terminal device may determine that the first mobility management parameter on the first access needs to be deleted. The first message does not carry first information.

In this example, the first message may be an authentication reject message or another message that is received by the terminal device on the first access.

An example in which the first message is the authentication reject message is used. After the terminal device receives the authentication reject message over the first access, if NAS integrity check of the authentication reject message succeeds, it may be determined that the first mobility management parameter on the first access needs to be deleted.

The following describes communication methods provided in embodiments of this application with reference to the foregoing three cases.

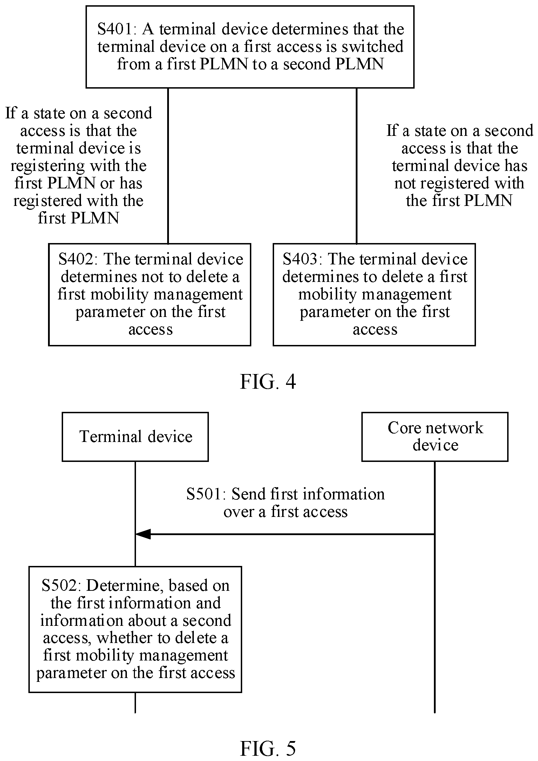

With reference to the foregoing case 1, FIG. 4 is a schematic flowchart of a communication method according to an embodiment of this application.

S401: A terminal device determines that the terminal device on a first access is switched from a first PLMN to a second PLMN.

After S401, S402 or S403 may be performed.

Optionally, before S401, the first PLMN has been registered over the first access.

The following describes an implementation of S401 with reference to a 3GPP access and a non-3GPP access.

If the first access is the 3GPP access, the terminal device may determine, in the following manner, that terminal device on the first access is switched from the first PLMN to the second PLMN: The terminal device on the first access is switched from a first cell to a second cell, where a PLMN corresponding to the first cell is the first PLMN. The terminal device receives, over the first access, system information broadcast by the second cell, where the system information may carry PLMN information of the second cell. The terminal device may determine, based on the PLMN information carried in the system information and locally stored PLMN information of the first access, that the terminal device on the first access is switched from the first PLMN to the second PLMN.

If the first access is the non-3GPP access, the terminal device may determine, in the following manner, that the terminal device on the first access is switched from the first PLMN to the second PLMN: The terminal device determines that a connection to a first access device is interrupted, where a PLMN corresponding to the first access device is the first PLMN. The terminal device sends a request message to a second access device, where the request message is for requesting to establish a communication connection to the second access device, and a PLMN corresponding to the second access device is the second PLMN. The terminal device receives a response message of the second access device, where the response message indicates the terminal device to access the second access device. The terminal device determines, based on the PLMN corresponding to the second access device, that the terminal device on the first access is switched from the first PLMN to the second PLMN.

For the first access device and the second access device, refer to related descriptions of the access device of the non-3GPP access network in the foregoing descriptions of the network architecture.

S402: If a state on the second access is that the terminal device is registering with the first PLMN or has registered with the first PLMN, the terminal device determines not to delete a first mobility management parameter on the first access.

Optionally, after S402, if deregistration is performed on the first PLMN (or deregistration or detaching is performed on the first PLMN) over the second access, the terminal device may determine to delete the first mobility management parameter on the first access.

For example, an implementation scenario in which deregistration of the first PLMN is performed over the second access is that switching is performed from the first PLMN to a third PLMN on the second access. The third PLMN is different from the first PLMN, and the third PLMN may be the same as or different from the second PLMN.

S403: If a state on the second access is that the terminal device has not registered with the first PLMN, the terminal device determines to delete a first mobility management parameter on the first access.

In a possible implementation, assuming that the first mobility management parameter includes a key set identifier, NAS security context information identified by the key set identifier includes a security encryption algorithm, and the security encryption algorithm may be a null encryption algorithm, for example, a 5G-EA0 algorithm or another algorithm that emerges in future communication development.

Therefore, before determining to delete the first mobility management parameter on the first access, the terminal device may determine that the security encryption algorithm is the null encryption algorithm.

Because a NAS air interface message is not encrypted when the security encryption algorithm is the null encryption algorithm, security of the NAS air interface message is low. In the foregoing manner, the first mobility management parameter is deleted when the security encryption algorithm in the NAS security context information identified by the key set identifier is the null encryption algorithm, thereby facilitating communication security of the terminal device.

Optionally, after determining not to delete the first mobility management parameter, the terminal device (or a core network device) may perform a corresponding action. For example, the first mobility management parameter is not deleted, or the first mobility management parameter is reserved, or the first mobility management parameter is not processed.

Optionally, after determining to delete the first mobility management parameter, the terminal device (or a core network device) may perform a corresponding action. For example, the first mobility management parameter is deleted.

The key set identifier in the first mobility management parameter is used as an example. The deleting the key set identifier may be implemented in at least one of the following manners:
setting a value of the key set identifier (the ngKSI to the value) to "no available key"; and
determining that one or more of a key KAMF, K'AMF, a NAS encryption key, and a NAS integrity key are invalid.

That "one or more of a key KAMF, K'AMF, a NAS encryption key, and a NAS integrity key are invalid" may also be described as that the NAS security context information related to the key set identifier is invalid or is no longer valid.

A GUTI in the first mobility management parameter is used as an example. The deleting the GUTI may be implemented in the following manner: setting the GUTI to be invalid.

Whether the first PLMN (namely, the PLMN registered over the first access) is registering over the second access may be used to determine whether the terminal device needs to use the first mobility management parameter for communication on the second access. In this embodiment of this application, the terminal device deletes the first mobility management parameter on the first access when the terminal device on the second access has not registered with the first PLMN, so that information maintenance costs of the terminal device can be reduced without affecting the communication performed by the terminal device on the second access, and it can be further avoided that the terminal device uses the invalid parameter (namely, the first mobility management parameter) for the communication on the first access, thereby improving communication performance of the terminal device on the first access.

When the terminal device on the second access has registered with the first PLMN or is registering with the first PLMN, the first mobility management parameter is not deleted, so that it can be ensured that the terminal device performs normal communication on the second access.

With reference to the foregoing case 2, FIG. 5 is a schematic flowchart of a communication method according to an embodiment of this application.

S501: A core network device sends first information to a terminal device over a first access. Correspondingly, the terminal device obtains the first information over the first access.

The first information may be carried in a message such as a registration reject message, a service reject message, or a deregistration message. It should be understood that only some examples are provided herein for description, and a specific message that carries the first information is not limited.

For the first information, refer to related descriptions in the foregoing case 2. Details are not described herein again.

For example, the core network device may be a core network device accessed by the first access.

S502: The terminal device determines, based on the first information and information about a second access, whether to delete a first mobility management parameter on the first access.

For example, the information about the second access may include at least one of the following: registration information on the second access or service information on the second access, or the information about the second access may further include other information. This is not specifically limited herein.

The registration information may represent a PLMN registration status on the second access, and the service information on the second access is information about whether an emergency service is being performed on the second access.

In a possible implementation, the terminal device may determine, based on the first information, that the first mobility management parameter on the first access needs to be deleted. The terminal device determines, based on the information about the second access, whether to delete the first mobility management parameter on the first access. For an implementation in which the terminal device determines, based on the first information, that the first mobility management parameter on the first access needs to be deleted, refer to related descriptions in the foregoing case 2.

In an example description, the first information is applicable to the first access, but is not applicable to the second access. Alternatively, the first information is applicable to both the first access and the second access. The following describes, with reference to a specific cause value, whether the first information is applicable to the first access and the second access.

For example, if the first information is the foregoing cause value #3 or cause value #6, the cause value indicates an illegal terminal, that is, the terminal device is not allowed. Therefore, neither the first access nor the second access of the terminal device is allowed, that is, the first information is applicable to both the first access and the second access.

For another example, if the first information is the foregoing cause value #7, the cause value indicates 5GS services not allowed, that is, the 5GS services of the terminal device not allowed. Therefore, neither the first access nor the second access of the terminal device is allowed, that is, the first information is applicable to both the first access and the second access.

For another example, if the first information is the foregoing cause value #11, the cause value indicates a PLMN not allowed, that is, the first access not allowed for the PLMN. If a PLMN that has been registered (or is being registered) over the second access is the same as the PLMN registered over the first access, the first information is also applicable to the second access. If a PLMN that has been registered (or is being registered) over the second access is different the PLMN registered over the first access, the first information is not applicable to the second access.

For another example, if the first information is the foregoing cause value #72, the cause value indicates a non-3GPP access not allowed for a 5GCN.

It may be understood that the terminal device receives the cause value #72 over the first access. It can be learned that the first access is the non-3GPP access, and the first information is applicable to the first access. If the second access is a 3GPP access, the first information is not applicable to the second access.

For another example, if the first information is the foregoing cause value #12, the cause value indicates a tracking area not allowed, and the cause value is applicable to a 3GPP access.

It may be understood that the terminal device receives the cause value #12 over the first access. It can be learned that the first information is applicable to the first access, that is, the first access is the 3GPP access. If the second access is a non-3GPP access, the first information is not applicable to the second access.

For another example, if the first information is the foregoing cause value #78, the cause value indicates a PLMN not allowed to operate at a present terminal device location. The cause value is applicable to a 3GPP access.

It may be understood that the terminal device receives the cause value #78 over the first access. It can be learned that the first information is applicable to the first access, that is, the first access is the 3GPP access. Therefore, if the second access is a non-3GPP access, the first information is not applicable to the second access.

With reference to a scenario in which the first information is applicable to the first access but the first information is not applicable to the second access, the following describes an implementation in which the terminal device determines, based on the information about the second access, whether to delete the first mobility management parameter on the first access.

It is assumed that the first information is not applicable to the second access. In an implementation, the terminal device may determine, based on the registration information on the second access, whether to delete the first mobility management parameter on the first access.

Optionally, the terminal device may determine, when the registration information on the second access meets one of the following conditions, to delete the first mobility management parameter on the first access: The PLMN is not registered over the second access, or the PLMN registered over the second access is different from the PLMN registered over the first access.

The terminal device may determine, when the registration information on the second access meets the following condition, not to delete the first mobility management parameter on the first access: the PLMN registered over the second access is the same as the PLMN registered over the first access.

That the PLMN registered over the second access is different from the PLMN registered over the first access may be understood as that the PLMN registered over the second access is different from the PLMN that is currently registered over the first access, the PLMN registered over the second access is not an RPLMN over the first access, and the second PLMN is not an EPLMN over the first access. Correspondingly, that the PLMN registered over the second access is the same as the PLMN registered over the first access in the following may be understood as that the PLMN registered over the second access is the same as the PLMN that is currently being registered over the first access, or the PLMN registered over the second access is an RPLMN over the first access, or the second PLMN is an EPLMN over the first access.

It should be understood that, understandings of the PLMN registered over the second access and the PLMN registered over the first access are different in the following, and understandings of the PLMN registered over the second access and the PLMN registered over the first access are the same as those described herein. Details are not described below one by one again.

It is assumed that the first information is applicable to the second access. In an implementation, the terminal device may determine, based on the registration information on the second access and the service information on the second access, whether to delete the first mobility management parameter on the first access.

Optionally, the terminal device may determine, when the registration information on the second access meets one of the following conditions, to delete the first mobility management parameter on the first access: The PLMN is not registered over the second access; or the PLMN registered over the second access is different from the PLMN registered over the first access.

The terminal device may determine, when the registration information on the second access and the service information on the second access meet one of the following conditions, to delete the first mobility management parameter on the first access: The PLMN registered over the second access is the same as the PLMN registered over the first access, and no emergency service is being performed on the second access.

The terminal device may determine, when the registration information on the second access and the service information on the second access meet the following condition, not to delete the first mobility management parameter on the first access: The PLMN registered over the second access is the same as the PLMN registered over the first access, and an emergency service is being performed on the second access.

In an optional solution, the terminal device may determine, after the emergency service on the second access ends, to delete the first mobility management parameter on the first access.

The foregoing describes the implementation in which the terminal device determines, based on the information about the second access, whether to delete the first mobility management parameter on the first access.

Optionally, for behavior performed after the core network device sends the first information, the core network device may alternatively determine, based on the first information and the information about the second access, whether to delete the first mobility management parameter on the first access.

An implementation in which the core network device determines, based on the first information and the information about the second access, whether to delete the first mobility management parameter on the first access is similar to the implementation in which the terminal device determines, based on the first information and the information about the second access, whether to delete the first mobility management parameter on the first access. A difference is as follows: The terminal device may determine, when the registration information on the second access meets one of the following conditions, to delete the first mobility management parameter on the first access: The PLMN is not registered over the second access; or the PLMN registered over the second access is different from the PLMN registered over the first access. The core network device may determine, when the registration information on the second access meets one of the following conditions, to delete the first mobility management parameter on the first access: The PLMN is not registered over the second access. For details, refer to the implementation in which the terminal device determines, based on the first information and the information about the second access, whether to delete the first mobility management parameter on the first access.

Optionally, the terminal device and/or the core network device may further perform one or more of the following four solutions.

Solution 1: If the first mobility management parameter is determined to be deleted on the first access, a second mobility management parameter and/or a third mobility management parameter may be deleted. The second mobility management parameter includes at least one of the following: a last visited tracking area TAI on the second access, or a TAI list (TAI list) on the second access. The third mobility management parameter includes at least one of the following: a last visited tracking area TAI on the first access or a TAI list on the first access.

For example, "the last visited tracking area TAI on the second access" may also be described as the last visited tracking area TAI corresponding to the second access, the last visited tracking area TAI of the terminal device in an access network corresponding to the second access, or the like. "The last visited tracking area TAI on the first access" may also be described as the last visited tracking area TAI corresponding to the first access, the last visited tracking area TAI of the terminal device in an access network corresponding to the first access, or the like.

It should be understood that the second mobility management parameter and the third mobility management parameter may alternatively include another parameter. This is not specifically limited herein.

Solution 2: If the first mobility management parameter is determined to be deleted, a service that is being performed on the second access may be stopped.

It needs to be noted that "stop" in this embodiment of this application may also be described as "terminate", "cancel", "suspend", "interrupt", or the like.

Solution 3: If determining to delete the first mobility management parameter, the terminal device may start a first timer on the second access or release an N1 NAS signaling connection on the second access. The core network device may release the N1 NAS signaling connection on the second access.

The first timer is used to trigger the terminal device to release the N1 NAS signaling connection on the second access. In an example description, the first timer is used to allow the core network device to release the N1 NAS signaling connection on the second access.

In the optional solution, the terminal device may release the N1 NAS signaling connection on the second access when the first timer expires.

Optionally, before the first timer expires, if the core network device releases the N1 NAS signaling connection on the second access, the terminal device may stop the first timer.

Solution 4: If the first mobility management parameter is determined to be deleted, and a mobility management procedure is being performed on the second access, the mobility management procedure may be stopped.

For example, the mobility management procedure may include one or more of the following procedures: common procedures (5GMM common procedures), specific procedures (5GMM specific procedures), connection management procedures (5GMM connection management procedures), and the like.

The common procedures may include but are not limited to: an identity authentication procedure, an authentication procedure, a security mode control procedure, a UE configuration update procedure, an uplink transmission procedure, a downlink transmission procedure, a slice authentication procedure, and the like.

The specific procedures may include but are not limited to: a registration procedure, a deregistration procedure, and the like.

The connection management procedures may include but are not limited to: a service request procedure, a paging procedure, and the like.

It should be understood that the mobility management procedure may further include other procedures, which are not listed one by one herein again.

It needs to be noted that in the foregoing four optional solutions, the terminal device may determine, based on the information about the second access, to delete the first mobility management parameter, or may determine, after the emergency service on the second access ends, to delete the first mobility management parameter.

Optionally, after determining not to delete the first mobility management parameter, the terminal device (or the core network device) may perform a corresponding action. For example, the first mobility management parameter is not deleted, or the first mobility management parameter is reserved, or the first mobility management parameter is not processed.

Optionally, after determining to delete the first mobility management parameter, the terminal device (or the core network device) may perform a corresponding action. For example, the first mobility management parameter is deleted.

For an implementation of deleting the first mobility management parameter, refer to related descriptions in the method in FIG. 4.

In this embodiment of this application, when the first mobility management parameter on the first access is deleted, considering the information about the second access, the first mobility management parameter may not be deleted when the first mobility management parameter is needed on the second access, so that the terminal device may use the first mobility management parameter for communication on the second access. This avoids a problem that normal communication cannot be performed on the second access because the first mobility management parameter on the first access is deleted, and reduces impact on the communication on the second access.

In addition, the terminal device determines whether to delete the first mobility management parameter, so that flexibility is higher and accuracy is also better.

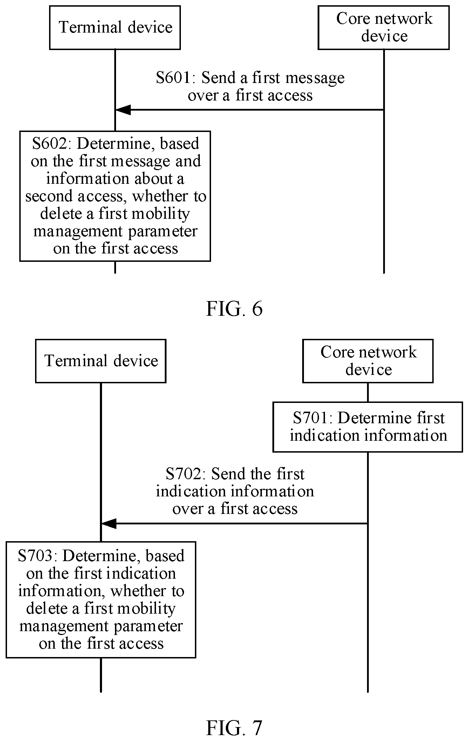

With reference to the foregoing case 3, FIG. 6 is a schematic flowchart of a communication method according to an embodiment of this application.

S601: A core network device sends a first message to a terminal device over a first access. Correspondingly, the terminal device receives the first message over the first access.

For the first message, refer to related descriptions in the foregoing case 3. Details are not described herein again.

S602: The terminal device determines, based on the first message and information about a second access, whether to delete a first mobility management parameter on the first access.

In a possible implementation, the terminal device may determine, based on the first message, that the first mobility management parameter on the first access needs to be deleted. The terminal device determines, based on the information about the second access, whether to delete the first mobility management parameter on the first access.

For an implementation in which the terminal device determines, based on the first message, that the first mobility management parameter on the first access needs to be deleted, refer to related descriptions in the foregoing case 3.

For an implementation in which the terminal device determines, based on the information about the second access, whether to delete the first mobility management parameter on the first access, refer to the implementation in which the terminal device determines, based on the information about the second access, whether to delete the first mobility management parameter on the first access in the method in FIG. 5. Details are not described herein again.

Optionally, for behavior performed after the core network device sends the first information, the core network device may alternatively determine, based on the first information and the information about the second access, whether to delete the first mobility management parameter on the first access.

For an implementation in which the core network device determines, based on the first information and the information about the second access, whether to delete the first mobility management parameter on the first access, refer to the implementation in which the core network device determines, based on the first information and the information about the second access, whether to delete the first mobility management parameter on the first access in the method in FIG. 5. Details are not described herein again.

Optionally, the terminal device and/or the core network device may further perform one or more of the following four solutions: deleting a second mobility management parameter and/or a third mobility management parameter; stopping a service that is being performed on the second access; starting a first timer on the second access or releasing an N1 NAS signaling connection; or stopping a mobility management procedure that is being performed on the second access.

For an implementation of deleting the second mobility management parameter and/or the third mobility management parameter, stopping the service that is being performed over the second access, starting the first timer on the second access or releasing the N1 NAS signaling connection, and stopping the mobility management procedure that is being performed on the second access, refer to related descriptions in the method in FIG. 5.

Optionally, after determining not to delete the first mobility management parameter, the terminal device (or the core network device) may perform a corresponding action. For example, the first mobility management parameter is not deleted, or the first mobility management parameter is reserved, or the first mobility management parameter is not processed.

Optionally, after determining to delete the first mobility management parameter, the terminal device (or the core network device) may perform a corresponding action. For example, the first mobility management parameter is deleted.

For an implementation of deleting the first mobility management parameter, refer to related descriptions in the method in FIG. 4.

In this embodiment of this application, when the first mobility management parameter on the first access is deleted, considering the information about the second access, the first mobility management parameter may not be deleted when the first mobility management parameter is needed on the second access, so that the terminal device may use the first mobility management parameter for communication on the second access. This avoids a problem that normal communication cannot be performed on the second access because the first mobility management parameter on the first access is deleted, and reduces impact on the communication on the second access.

In addition, the terminal device determines whether to delete the first mobility management parameter, so that flexibility is higher and accuracy is also better.

The foregoing describes a method for the terminal device to determine whether to delete the first mobility management parameter. With reference to the foregoing case 2 and case 3, the following describes a method for the core network device indicates the terminal device whether to delete the first mobility management parameter.

FIG. 7 is a schematic flowchart of a communication method according to an embodiment of this application.

S701: A core network device determines first indication information.

A terminal device may access the core network device over a first access.

In a possible implementation, the core network device may determine, based on second indication information and information about a second access, whether to delete a first mobility management parameter on the first access. The second indication information indicates a reason why the core network device rejects a request of the terminal device.

The second indication information may be the first information in the foregoing case 2.

For an implementation in which the core network device determines, based on the second indication information and the information about the second access, whether to delete the first mobility management parameter on the first access, refer to the implementation in which the core network device determines, based on the first information and the information about the second access, whether to delete the first mobility management parameter on the first access in the method in FIG. 5.

In another possible implementation, the core network device may determine, based on a first message and information about a second access, whether to delete a first mobility management parameter on the first access. For the first message, refer to related descriptions in the foregoing case 3.

For an implementation in which the core network device determines, based on the first message and the information about the second access, whether to delete the first mobility management parameter on the first access, refer to the implementation in which the core network device determines, based on the first message and the information about the second access, whether to delete the first mobility management parameter on the first access in the method in FIG. 6.

S702: The core network device sends first indication information to the terminal device over the first access. Correspondingly, the terminal device receives the first indication information over the first access.

The first indication information indicates whether to delete the first mobility management parameter on the first access.

The first indication information may indicate, in an explicit indication manner, whether to delete the first mobility management parameter on the first access. For example, the first indication information indicates, by using different values of one or more bits, whether to delete the first mobility management parameter on the first access. For example, the first indication information may indicate, by using a first value of the one or more bits, to delete the first mobility management parameter on the first access, and indicate, by using a second value, not to delete the first mobility management parameter on the first access.

Alternatively, the first indication information may indicate, in an implicit indication manner, to delete the first mobility management parameter on the first access. For example, if the first indication information carries a specific field, the first indication information indicates not to delete the first mobility management parameter on the first access; or if the first indication information does not carry a specific field, the first indication information indicates to delete the first mobility management parameter on the first access.

Alternatively, the first indication information may indicate, in an implicit indication manner, not to delete the first mobility management parameter on the first access. For example, if the first indication information carries a specific field, the first indication information indicates to delete the first mobility management parameter on the first access; or if the first indication information does not carry a specific field, the first indication information indicates not to delete the first mobility management parameter on the first access.

S703: The terminal device determines, based on the first indication information, whether to delete the first mobility management parameter on the first access.

In a possible implementation, the terminal device may determine, based on the first indication information and the information about the second access, whether to delete the first mobility management parameter on the first access.

In a specific implementation, the terminal device may determine, based on the first indication information and registration information on the second access, whether to delete the first mobility management parameter on the first access.

For example, if the first indication information indicates to delete the first mobility management parameter on the first access, when the registration information on the second access meets one of the following conditions, the first mobility management parameter on the first access is determined to be deleted: A PLMN is not registered over the second access, or the PLMN registered over the second access is different from a PLMN registered over the first access.

For another example, if the first indication information indicates to delete the first mobility management parameter on the first access, and a PLMN registered over the second access is the same as a PLMN registered over the first access, whether to delete the first mobility management parameter on the first access is determined based on service information on the second access. The service information on the second access is information about whether an emergency service is being performed on the second access.

For example, if the emergency service is being performed on the second access, the first mobility management parameter on the first access is determined not to be deleted. Alternatively, if no emergency service is being performed on the second access, the first mobility management parameter is determined to be deleted on the first access.

Optionally, the terminal device may further perform one or more of the following four solutions: deleting a second mobility management parameter and/or a third mobility management parameter; stopping a service that is being performed on the second access; starting a first timer on the second access or releasing an N1 NAS signaling connection; or stopping a mobility management procedure that is being performed on the second access.

For an implementation of deleting the second mobility management parameter and/or the third mobility management parameter, stopping the service that is being performed over the second access, starting the first timer on the second access or releasing the N1 NAS signaling connection, and stopping the mobility management procedure that is being performed on the second access, refer to related descriptions in the method in FIG. 5.

Optionally, after determining not to delete the first mobility management parameter, the terminal device (or the core network device) may perform a corresponding action. For example, the first mobility management parameter is not deleted, or the first mobility management parameter is reserved, or the first mobility management parameter is not processed.

Optionally, after determining to delete the first mobility management parameter, the terminal device (or the core network device) may perform a corresponding action. For example, the first mobility management parameter is deleted.

For an implementation of deleting the first mobility management parameter, refer to related descriptions in the method in FIG. 4.

In this embodiment of this application, a network device indicates to the terminal device whether to delete the first mobility management parameter on the first access, so that complexity of the terminal device can be reduced.

In addition, when the first mobility management parameter on the first access is deleted, considering the information about the second access, the first mobility management parameter may not be deleted when the first mobility management parameter is needed on the second access, so that the terminal device may use the first mobility management parameter for communication on the second access. This avoids a problem that normal communication cannot be performed on the second access because the first mobility management parameter on the first access is deleted, and reduces impact on the communication on the second access.

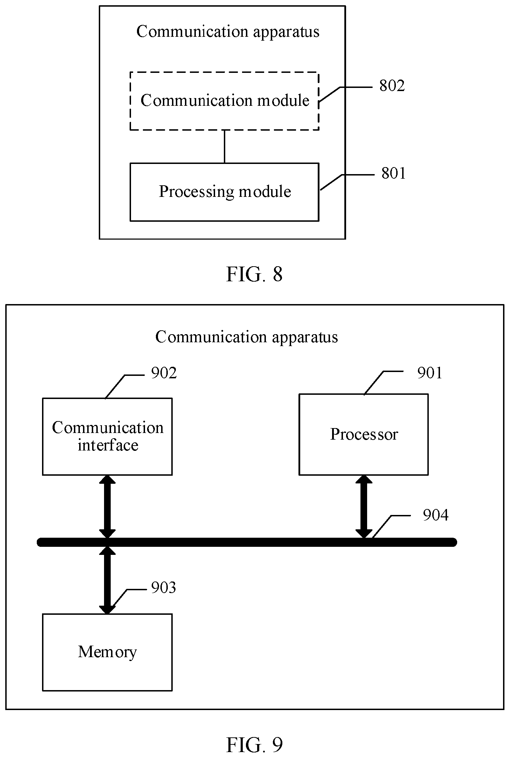

Based on a same concept as the method embodiments, an embodiment of this application provides a communication apparatus. A structure of the communication apparatus may be shown in FIG. 8, and includes a processing module 801. Optionally, the apparatus may further include a communication module 802.

In an implementation, the communication apparatus may be specifically configured to implement the method performed by the terminal device in the embodiment in FIG. 4. The apparatus may be the terminal device, or may be a chip or a chip group in the terminal device, or a part of the chip that is configured to perform a related method function. The processing module 801 is configured to: determine that the terminal device on a first access is switched from a first PLMN to a second PLMN; if a state of the terminal device on a second access is that the terminal device is registering with the first PLMN or has registered with the first PLMN, determine not to delete a first mobility management parameter on the first access; and if the state on the second access is that the terminal device has not registered with the first PLMN, determine to delete the first mobility management parameter, where the first access and the second access belong to different access types.

Optionally, the processing module 801 is further configured to: before the terminal device determines that the terminal device on the first access is switched from the first PLMN to the second PLMN, determine that the first access has registered with the first PLMN.

The processing module 801 may be further configured to: after the processing module determines not to delete the first mobility management parameter, if the switching is performed from the first PLMN to a third PLMN on the second access, determine to delete the first mobility management parameter.

For example, the first mobility management parameter includes at least one of the following: a key set identifier or a globally unique temporary user equipment identity, where the key set identifier identifies NAS security context information.

Optionally, the NAS security context information includes a security encryption algorithm, and the security encryption algorithm is a null encryption algorithm.

In an implementation, the communication apparatus may be specifically configured to implement the method performed by the terminal device in the embodiment in FIG. 5. The apparatus may be the terminal device, or may be a chip or a chip group in the terminal device, or a part of the chip that is configured to perform a related method function. The communication module 802 is configured to obtain first information over a first access of the terminal device. The processing module 801 is configured to determine, based on first information and information about a second access of the terminal device, whether to delete a first mobility management parameter on the first access. The first information indicates a reason why a core network device rejects a request of the terminal device, and the first access and the second access belong to different access types.

Optionally, the first information is not applicable to the second access. When determining, based on the first information and the information about the second access of the terminal device, whether to delete the first mobility management parameter, the processing module 801 is specifically configured to determine, based on the first information and registration information on the second access, whether to delete the first mobility management parameter.

When determining, based on the first information and the registration information on the second access, whether to delete the first mobility management parameter, the processing module 801 is specifically configured to determine, when the registration information on the second access meets one of the following conditions, to delete the first mobility management parameter: A PLMN is not registered over the second access, or the PLMN registered over the second access is different from a PLMN registered over the first access.

When determining, based on the first information and the registration information on the second access, whether to delete the first mobility management parameter, the processing module 801 is specifically configured to determine, when the registration information on the second access meets the following condition, not to delete the first mobility management parameter: The PLMN registered over the second access is the same as the PLMN registered over the first access.

Optionally, the first information is applicable to the second access. When determining, based on the first information and the information about the second access of the terminal device, whether to delete the first mobility management parameter, the processing module 801 is specifically configured to determine, based on the first information, the registration information on the second access, and service information on the second access, whether to delete the first mobility management parameter, where the service information on the second access is information about whether an emergency service is being performed on the second access.

When processing the first mobility management parameter based on the first information, the registration information on the second access, and the service information on the second access, the processing module 801 is specifically configured to determine, when the registration information on the second access and the service information on the second access meet one of the following conditions, to delete the first mobility management parameter: A PLMN is not registered over the second access; a PLMN registered over the second access is different from a PLMN registered over the first access; or a PLMN registered over the second access is the same as a PLMN registered over the first access, and no emergency service is being performed on the second access.

When processing the first mobility management parameter based on the first information, the registration information on the second access, and the service information on the second access, the processing module 801 is specifically configured to determine, when the registration information on the second access and the service information on the second access meet the following condition, not to delete the first mobility management parameter: The PLMN registered over the second access is the same as the PLMN registered over the first access, and the emergency service is being performed on the second access.

Optionally, the processing module 801 is further configured to determine to delete the first mobility management parameter after the emergency service ends.

Optionally, the processing module 801 is further configured to: if determining to delete the first mobility management parameter, delete a second mobility management parameter, where the second mobility management parameter includes at least one of the following: a last visited tracking area identity on the second access or a tracking area identity list on the second access.

Optionally, the processing module 801 is further configured to: if determining to delete the first mobility management parameter, stop a service that is being performed on the second access.

Optionally, the processing module 801 is further configured to: start a first timer on the second access if determining to delete the first mobility management parameter, where the first timer is used to trigger the terminal device to release an N1 NAS signaling connection; or release an N1 NAS signaling connection.

Optionally, the processing module 801 is further configured to: if the first mobility management parameter is determined to be deleted, and a mobility management procedure is being performed on the second access, stop the mobility management procedure.

For example, the first mobility management parameter includes at least one of the following: a key set identifier or a globally unique temporary user equipment identity, where the key set identifier identifies NAS security context information.

In an implementation, the communication apparatus may be further configured to implement the method performed by the core network device in the embodiment in FIG. 5. For details, refer to the foregoing related descriptions. Details are not described herein again. The apparatus may be the core network device, or may be a chip or a chip group in the core network device, or a part of the chip that is configured to perform a related method function. The communication module 802 is configured to send first information to a terminal device over a first access of the terminal device, where the first information indicates a reason why the core network device rejects a request of the terminal device. The processing module 801 is configured to determine, based on first information and information about a second access of the terminal device, whether to delete a first mobility management parameter on the first access, where the first access and the second access belong to different access types.

Optionally, the first information is not applicable to the second access. When determining, based on the first information and the information about the second access, whether to delete the first mobility management parameter, the processing module 801 is specifically configured to determine, based on the first information and registration information on the second access, whether to delete the first mobility management parameter.

When determining, based on the first information and the registration information on the second access, whether to delete the first mobility management parameter, the processing module 801 may be specifically configured to determine, when the registration information on the second access meets one of the following conditions, to delete the first mobility management parameter: A PLMN is not registered over the second access.

When determining, based on the first information and the registration information on the second access, whether to delete the first mobility management parameter, the processing module 801 may be specifically configured to determine, when the registration information on the second access meets the following condition, not to delete the first mobility management parameter: The PLMN registered over the second access is the same as a PLMN registered over the first access.

Optionally, the first information is applicable to the second access. When determining, based on the first information and the information about the second access, whether to delete the first mobility management parameter, the processing module 801 may be specifically configured to determine, based on the first information, the registration information on the second access, and service information on the second access, whether to delete the first mobility management parameter, where the service information on the second access is information about whether an emergency service is being performed on the second access.

When processing the first mobility management parameter based on the first information, the registration information on the second access, and the service information on the second access, the processing module 801 may be specifically configured to: determine, when the registration information on the second access and the service information on the second access meet one of the following conditions, to delete the first mobility management parameter: A PLMN is not registered over the second access; or a PLMN registered over the second access is the same as a PLMN registered over the first access, and no emergency service is being performed on the second access.

When processing the first mobility management parameter based on the first information, the registration information on the second access, and the service information on the second access, the processing module 801 may be specifically configured to determine, when the registration information on the second access and the service information on the second access meet the following condition, not to delete the first mobility management parameter: The PLMN registered over the second access is the same as the PLMN registered over the first access, and the emergency service is being performed on the second access.

Optionally, the processing module 801 is further configured to determine to delete the first mobility management parameter after the emergency service ends.

Optionally, the processing module 801 is further configured to: if determining to delete the first mobility management parameter, delete a second mobility management parameter, where the second mobility management parameter includes at least one of the following: a last visited tracking area identity on the second access or a tracking area identity list on the second access.

Optionally, the processing module 801 is further configured to: if determining to delete the first mobility management parameter, stop a service that is being performed on the second access.

Optionally, the processing module 801 is further configured to release an N1 NAS signaling connection if determining to delete the first mobility management parameter.

Optionally, the processing module 801 is further configured to: if the first mobility management parameter is determined to be deleted, and a mobility management procedure is being performed on the second access, stop the mobility management procedure.

For example, the first mobility management parameter includes at least one of the following: a key set identifier or a globally unique temporary user equipment identity, where the key set identifier identifies NAS security context information.

In an implementation, the communication apparatus may be specifically configured to implement the method performed by the terminal device in the embodiment in FIG. 7. The apparatus may be the terminal device, or may be a chip or a chip group in the terminal device, or a part of the chip that is configured to perform a related method function. The communication module 802 is configured to receive first indication information over a first access of the terminal device, where the first indication information indicates whether to delete a first mobility management parameter on the first access. The processing module 801 is configured to determine, based on the first indication information, whether to delete the first mobility management parameter on the first access, where the first access and a second access belong to different access types.

When determining, based on the first indication information, whether to delete the first mobility management parameter, the processing module 801 may be specifically configured to determine, based on the first indication information and information about the second access, whether to delete the first mobility management parameter.

When determining, based on the first indication information and the information about the second access, whether to delete the first mobility management parameter, the processing module 801 may be specifically configured to determine, based on the first indication information and registration information on the second access, whether to delete the first mobility management parameter.

When determining, based on the first indication information and the registration information on the second access, whether to delete the first mobility management parameter, the processing module 801 may be specifically configured to: if the first indication information indicates to delete the first mobility management parameter, determine, when the registration information on the second access meets one of the following conditions, to delete the first mobility management parameter: A PLMN is not registered over the second access, or the PLMN registered over the second access is different from a PLMN registered over the first access.

When determining, based on the first indication information and the registration information on the second access, whether to delete the first mobility management parameter, the processing module 801 may be specifically configured to: if the first indication information indicates to delete the first mobility management parameter, and the PLMN registered over the second access is the same as the PLMN on which the registration is not performed over the first access, determine, based on service information on the second access, whether to delete the first mobility management parameter, where the service information on the second access is information about whether an emergency service is being performed on the second access.

When determining, based on the service information on the second access, whether to delete the first mobility management parameter, the processing module 801 may be specifically configured to: if the emergency service is being performed on the second access, determine not to delete the first mobility management parameter; or if no emergency service is being performed on the second access, determine to delete the first mobility management parameter.

Optionally, the processing module 801 is further configured to: if determining to delete the first mobility management parameter, determine to delete the first mobility management parameter after an emergency service ends.

Optionally, the processing module 801 is further configured to: if determining to delete the first mobility management parameter, delete a second mobility management parameter, where the second mobility management parameter includes at least one of the following: a last visited tracking area identity on the second access or a tracking area identity list on the second access.

Optionally, the processing module 801 is further configured to: if determining to delete the first mobility management parameter, stop a service that is being performed on the second access.

Optionally, the processing module 801 is further configured to: start a first timer on the second access if determining to delete the first mobility management parameter, where the first timer is used to trigger the terminal device to release an N1 NAS signaling connection; or release an N1 NAS signaling connection.

Optionally, the processing module 801 is further configured to: if the first mobility management parameter is determined to be deleted, and a mobility management procedure is being performed on the second access, stop the mobility management procedure.

For example, the first mobility management parameter includes at least one of the following: a key set identifier or a globally unique temporary user equipment identity, where the key set identifier identifies NAS security context information.

In an implementation, the communication apparatus may be further configured to implement the method performed by the core network device in the embodiment in FIG. 7. For details, refer to the foregoing related descriptions. Details are not described herein again. The apparatus may be the core network device, or may be a chip or a chip group in the core network device, or a part of the chip that is configured to perform a related method function. The processing module 801 is configured to determine first indication information. The communication module 802 is configured to send first indication information to a terminal device over a first access of the terminal device, where the first indication information indicates whether to delete a first mobility management parameter on the first access, and the first access and a second access belong to different access types.

The processing module 801 may be specifically configured to determine the first indication information based on second indication information and information about the second access, where the second indication information indicates a reason why the core network device rejects a request of the terminal device.

The second indication information is not applicable to the second access. The processing module 801 may be specifically configured to determine the first indication information based on the second indication information and registration information on the second access.

The processing module 801 may be specifically configured to indicate, by the first indication information when the registration information on the second access meets one of the following conditions, to delete the first mobility management parameter: A PLMN is not registered over the second access; or indicate, by the core network device by the first indication information when the registration information on the second access meets the following condition, not to delete the first mobility management parameter: The PLMN has been registered or is being registered over the second access.

The second indication information is applicable to the second access. The processing module 801 may be specifically configured to determine the first indication information based on the second indication information, the registration information on the second access, and service information on the second access, where the service information on the second access is information about whether an emergency service is being performed on the second access.

The processing module 801 may be specifically configured to indicate, by the first indication information when the registration information on the second access and the service information on the second access meet one of the following conditions, to delete the first mobility management parameter: The PLMN is not registered over the second access; or The PLMN has been registered or is being registered over the second access, and no emergency service is being performed on the second access.

The processing module 801 may be specifically configured to indicate, by the first indication information when the registration information on the second access and the service information on the second access meet the following condition, not to delete the first mobility management parameter: The PLMN has been registered or is being registered over the second access, and the emergency service is being performed on the second access.

For example, the first mobility management parameter includes at least one of the following: a key set identifier or a globally unique temporary user equipment identity, where the key set identifier identifies NAS security context information.

In addition, the communication apparatus may be further configured to implement the method performed by the communication device (for example, the terminal device or the core network device) in the embodiment in FIG. 6. The apparatus may be the communication device, or may be a chip or a chip group in the communication device, or a part of the chip that is configured to perform a related method function.

In embodiments of this application, division into the modules is an example and is merely logical function division, and may be other division during actual implementation. In addition, functional modules in embodiments of this application may be integrated into one processor, may exist alone physically, or two or more modules may be integrated into one module. The integrated module may be implemented in a form of hardware, or may be implemented in a form of a software functional module. It may be understood that for functions or implementations of the modules in this embodiment of this application, further refer to related descriptions in the method embodiments.

In a possible manner, the communication apparatus may be shown in FIG. 9. The apparatus may be a communication device or a chip in the communication device. The communication device may be the terminal device in the foregoing embodiments or the network device in the foregoing embodiments. The apparatus includes a processor 901 and a communication interface 902, and may further include a memory 903. The processing module 801 may be the processor 901. The communication module 802 may be the communication interface 902.

The processor 901 may be a CPU, a digital processing unit, or the like. The communication interface 902 may be a transceiver, an interface circuit such as a transceiver circuit, a transceiver chip, or the like. The apparatus further includes a memory 903, configured to store a program executed by the processor 901. The memory 903 may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory 903 is any other medium that can be used to carry or store expected program code in a form of an instruction or a data structure and that can be accessed by a computer, but is not limited thereto.

The processor 901 is configured to execute the program code stored in the memory 903, and is specifically configured to perform an action of the processing module 801. Details are not described herein again in this application. The communication interface 902 is specifically configured to perform an action of the communication module 802. Details are not described herein in this application.

In this embodiment of this application, a specific connection medium between the communication interface 902, the processor 901, and the memory 903 is not limited. In this embodiment of this application, the memory 903, the processor 901, and the communication interface 902 are connected through a bus 904 in FIG. 9. The bus is represented by using a bold line in FIG. 9. The foregoing is merely an example for description. A connection manner of other components is not limited thereto. The bus may be classified into an address bus, a data bus, a control bus, and the like. For ease of representation, only one bold line is used to represent the bus in FIG. 9, but this does not mean that there is only one bus or only one type of bus.

An embodiment of this application further provides a computer-readable storage medium, configured to store computer software instructions that need to be performed by the foregoing processor. The computer software instructions include a program that needs to be performed by the foregoing processor.

An embodiment of this application further provides a communication system, including a communication apparatus configured to implement a function of the terminal device in the embodiment in FIG. 4 and a communication apparatus configured to implement a function of the network device in the embodiment in FIG. 4.

An embodiment of this application further provides a communication system, including a communication apparatus configured to implement a function of the terminal device in the embodiment in FIG. 5 and a communication apparatus configured to implement a function of the network device in the embodiment in FIG. 5.

An embodiment of this application further provides a communication system, including a communication apparatus configured to implement a function of the terminal device in the embodiment in FIG. 6 and a communication apparatus configured to implement a function of the network device in the embodiment in FIG. 6.

An embodiment of this application further provides a communication system, including a communication apparatus configured to implement a function of the terminal device in the embodiment in FIG. 7 and a communication apparatus configured to implement a function of the network device in the embodiment in FIG. 7.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include a computer-usable program code.

This application is described with reference to the flowcharts and/or the block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may alternatively be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the spirit and scope of this application. In this way, if these modifications and variations to this application fall within the scope of the claims of this application and their equivalent technologies, this application is also intended to cover these modifications and variations.

## Claims

1. A communication method, wherein the method is applied to a terminal device, and the method comprises:
registering, by the terminal device, with a first public land mobile network PLMN over a first access;
determining that the terminal device on the first access is switched from the first PLMN to a second PLMN other than the first PLMN and an equivalent PLMN of the first PLMN; and
if a state of the terminal device on a second access is that the terminal device is not registering with the first PLMN or has not registered with the first PLMN, determining to delete a first mobility management parameter, wherein
the first access and the second access belong to different access types.

2. The method according to claim 1, wherein the method further comprises:
determining not to delete the first mobility management parameter; and
if the switching is performed from the first PLMN to a third PLMN over the second access, determining to delete the first mobility management parameter.

3. The method according to claim 1 or 2, wherein the first mobility management parameter comprises at least one of the following: a key set identifier or a globally unique temporary user equipment identity, wherein the key set identifier identifies non-access stratum NAS security context information.

4. The method according to claim 3, wherein the NAS security context information comprises a security encryption algorithm, and the security encryption algorithm is a null encryption algorithm.

5. A communication method, wherein the method is applied to a terminal device, and the method comprises:
obtaining first information over a first access of the terminal device, wherein the first information indicates a reason why a core network device rejects a request of the terminal device; and
determining, based on the first information and information about a second access of the terminal device, whether to delete a first parameter, wherein
the first access and the second access belong to different access types.

6. The method according to claim 5, wherein the first information is not applicable to the second access; and the determining, based on the first information and information about a second access of the terminal device, whether to delete a first parameter comprises:
determining, based on the first information and registration information on the second access, whether to delete the first parameter.

7. The method according to claim 6, wherein the determining, based on the first information and registration information on the second access, whether to delete the first parameter comprises:
determining, when the registration information on the second access meets one of the following conditions, to delete the first parameter: a public land mobile network PLMN has not registered over the second access, or the PLMN registered over the second access is different from a PLMN registered over the first access.

8. The method according to claim 6 or 7, wherein the determining, based on the first information and registration information on the second access, whether to delete the first parameter comprises:
determining, when the registration information on the second access meets the following condition, not to delete the first parameter: the PLMN registered over the second access is the same as the PLMN registered over the first access.

9. The method according to claim 5, wherein the first information is applicable to the second access; and
the determining, based on the first information and information about a second access of the terminal device, whether to delete a first parameter comprises:
determining, based on the first information, the registration information on the second access, and service information on the second access, whether to delete the first parameter, wherein the service information on the second access is information about whether an emergency service is being performed on the second access.

10. The method according to claim 9, wherein the processing the first parameter based on the first information, the registration information on the second access, and the service information on the second access comprises:
determining, when the registration information on the second access and the service information on the second access meet one of the following conditions, to delete the first parameter:
a PLMN is not registered over the second access;
a PLMN registered over the second access is different from a PLMN registered over the first access; or
a PLMN registered over the second access is the same as a PLMN registered over the first access, and no emergency service is being performed on the second access.

11. The method according to claim 9 or 10, wherein the determining, based on the first information, the registration information on the second access, and service information on the second access, whether to delete the first parameter comprises:
determining, when the registration information on the second access and the service information on the second access meet the following condition, not to delete the first parameter: the PLMN registered over the second access is the same as the PLMN registered over the first access, and the emergency service is being performed on the second access.

12. The method according to claim 11, wherein the method further comprises:
determining to delete the first parameter after the emergency service ends.

13. The method according to any one of claims 5 to 12, wherein if the first parameter is determined to be deleted, the method further comprises:
deleting a second parameter, wherein the second parameter comprises at least one of the following: a last visited tracking area identity on the second access or a tracking area identity list on the second access.

14. The method according to any one of claims 5 to 13, wherein if the first parameter is determined to be deleted, the method further comprises:
stopping a service that is being performed on the second access.

15. The method according to any one of claims 5 to 14, wherein if the first parameter is determined to be deleted, the method further comprises:
starting a first timer on the second access, wherein the first timer is used to trigger the terminal device to release an N1 non-access stratum signaling connection; or
releasing an N1 non-access stratum signaling connection.

16. The method according to any one of claims 5 to 15, wherein if the first parameter is determined to be deleted, the method further comprises:
if a mobility management procedure is being performed on the second access, stopping the mobility management procedure.

17. The method according to any one of claims 5 to 16, wherein the first parameter comprises at least one of the following: a key set identifier or a globally unique temporary user equipment identity, wherein the key set identifier identifies security context information.

18. A communication apparatus, comprising a unit or a module configured to perform the method according to any one of claims 1 to 4, or comprising a unit or a module configured to perform the method according to any one of claims 5 to 17.

19. A communication apparatus, wherein the apparatus comprises a processor and a memory, and the processor is coupled to the memory;
the memory is configured to store a program or instructions; and
the processor is configured to invoke the program or the instructions, to enable the communication apparatus to perform the method according to any one of claims 1 to 4 or perform the method according to any one of claims 5 to 17.

20. A computer-readable storage medium, wherein the computer-readable storage medium is configured to store computer instructions, and when the computer instructions are run on a computer, the computer is enabled to perform the method according to any one of claims 1 to 17.
